# EUROPÄISCHE PATENTANMELDUNG

(11) **EP 4 844 850 A1**
(43) Veröffentlichungstag der Anmeldung: **25.11.2026**
(21) Anmeldenummer: 25177273.7
(22) Anmeldetag: 19.05.2025
(51) Int. Cl.: H01M 10/04, H01M 50/105, H01M 50/211, H01M 50/284, H01M 50/502, H01M 50/244, H01M 50/242, H01M 50/249, H01M 50/251, H01M 50/264, H01M 50/503, H01M 50/507, H01M 50/51, H01M 10/48

(54) **BATTERIEPACK**

(71) Anmelder: Nicolai, Karlheinz, 31089 Duingen Lübbrechtsen (DE)
(72) Erfinder: NICOLAI, Karlheinz, 31089 Duingen Lübbrechtsen (DE); BRAUN, Sebastian, 76297 Stutensee (DE)
(74) Vertreter: Wallinger Ricker Schlotter PartGmbB

(57) **Zusammenfassung**

Die Offenbarung betrifft ein Batteriepack (40), insbesondere zum Antrieb eines elektrisch angetriebenen Leichtfahrzeugs oder eines Elektrogerätes, mit einer ersten und einer zweiten Pouch-Zellen-Anordnung (20a, 20b) mit jeweils einer ersten und einer zweiten Pouch-Zelle (1a, 1b) mit jeweils einer ersten und einer zweiten Elektrode (2a, 2b, 4a, 4b), welche elektrisch miteinander verbunden sind, wobei die erste Pouch-Zellen-Anordnung (20a) in einer Stapelrichtung (22) unmittelbar benachbart zu, insbesondere über, der zweiten Pouch-Zellen-Anordnung (20b) angeordnet ist.

Das Batteriepack (40) weist wenigstens ein Kompressionsband (100) auf, welches wenigstens teilweise um die erste und die zweite Pouch-Zellen-Anordnung (20a, 20b) herumgeführt ist und die ersten Pouch-Zellen (1a) und/oder die zweiten Pouch-Zellen (1b) der ersten Pouch-Zellen-Anordnung (20a) und der zweiten Pouch-Zellen-Anordnung (20b) in der Stapelrichtung (22) komprimiert und dadurch unter eine in der Stapelrichtung (22) wirkende Vorspannung setzt.

Dadurch wird einer Veränderung der Dicke der Pouch-Zellen (1a, 1b) kontrolliert entgegengewirkt, was sich positiv auf die Lebensdauer der Pouch-Zellen (1a, 1b) auswirkt.

## Beschreibung

Die Erfindung betrifft ein Batteriepack, insbesondere zum Antrieb eines elektrisch angetriebenen Leichtfahrzeugs oder eines Elektrogerätes.

Wiederaufladbare Batteriepacks werden in Leichtfahrzeugen, beispielsweise E-Bikes, Motorrädern oder Elektrorollern, als Antriebsbatterien für einen Elektromotor verwendet. Auch Luftfahrzeuge, insbesondere unbemannte, werden vermehrt elektrisch mit Batteriepacks betrieben. Genauso kommen derartige Batteriepacks in Elektrogeräten wie kabellosen Werkzeugen zum Einsatz. Oft sind die Batteriepacks aus Pouch-Zellen aufgebaut, welche vorzugsweise übereinander gestapelt sind. Mehrere Pouch-Zellen sind seriell und/oder parallel zusammengeschaltet, damit das Batteriepack die nötige Spannung und Leistung liefern kann.

Unter einer Pouch-Zelle wird dabei im herkömmlichen Sinne eine Batteriezelle verstanden, welche im Wesentlichen die Form eines flachen Beutels (dem "Beutelabschnitt" der Pouch-Zelle) mit einer nicht-starren Umhüllung aufweist, aus dem die als Flachkörper ausgestalteten Elektroden herausragen.

In dem Beutelabschnitt der Pouch-Zelle sind vorzugsweise die aktiven Komponenten der Pouch-Zelle wie innere Elektrodenblätter und ein Elektrolyt sowie dazwischenliegende Separatorblätter angeordnet. Diese Komponenten können im Beutelabschnitt von einer Folie, beispielsweise einer Aluminiumfolie, einer Folie enthaltend oder bestehend aus einem anderen Metall oder einer Kunststofffolie, umgeben sein.

Der Beutelabschnitt kann als ein Flachkörper, beispielsweise als ein flacher Quader oder allgemein als ein flaches Polyeder, ausgestaltet sein. Der Beutelabschnitt kann an zwei sich gegenüberliegenden Seiten zwei Flachseiten aufweisen, die senkrecht zu einer Stapelrichtung ausgerichtet sein können. Die beiden sich gegenüberliegenden Flachseiten können durch Schmalseiten insbesondere umlaufend verbunden sein.

Bei derartigen, aus Pouch-Zellen aufgebauten Batteriepacks ergibt sich das Problem, dass die Pouch-Zellen sich im Betrieb "aufblähen" können. Wird der dadurch verursachten Veränderung der Dicke der Pouch-Zellen nicht kontrolliert entgegengewirkt, so kann sich dies negativ auf die Lebensdauer der Pouch-Zellen auswirken. Daher müssen die Pouch-Zellen in dem Batteriepack unter eine bestimmte Vorspannung gesetzt werden, beispielsweise unter eine Vorspannung von 200 bis 700 N. Die Vorspannung sollte außerdem einen Maximalwert, der zum Beispiel 900 N betragen kann, während der Lebenszeit des Batteriepacks nicht überschreiten. Weiterhin müssen die Pouch-Zellen sicher gegeneinander und gegenüber den sie umgebenden Bauteilen fixiert werden.

In der deutschen Patentanmeldung 10 2024 131 846.5 desselben Erfinders (noch unveröffentlicht), welche ebenfalls ein Batteriepack aus übereinander gestapelten Pouch-Zellen betrifft, werden diese Probleme durch eine Andruckplatte gelöst, welche die Pouch-Zellen im Stapel fixiert, ein Aufblähen der Beutelabschnitte der Pouch-Zellen verhindert und durch eine Spannvorrichtung gegen die Beutelabschnitte gedrückt wird. Die Spannvorrichtung weist wenigstens eine in das Gehäuse des Batteriepacks geschraubte Schraube auf, die gegen die Andruckplatte gefahren werden kann, um gegen die Beutelabschnitte zu drücken.

Eine solche Spannvorrichtung ist jedoch aufwändig zu konstruieren und erfordert relativ schwere und teure Bauteile. Weiterhin erlaubt die Spannvorrichtung aufgrund ihrer Abstützung an dem Gehäuse keine einfache Möglichkeit, den Stapel der Pouch-Zellen von dem Gehäuse zu trennen, ohne die Vorspannung der Pouch-Zellen zu lösen. Zusätzlich ist eine ungewollte Veränderung der Vorspannung von außen möglich. Hier besteht das Risiko einer Fehlbedienung oder sogar einer Beschädigung des Batteriepacks während seiner Verwendung in dem Fahrzeug oder Elektrogerät.

Der Erfindung liegt daher die Aufgabe zugrunde, ein aus Pouch-Zellen aufgebautes Batteriepack bereitzustellen, bei dem eine Dickenveränderung der Pouch-Zellen auf einfache Weise kontrolliert und begrenzt werden kann und die Pouch-Zellen stets sicher fixiert sind.

Diese Aufgabe wird durch ein Batteriepack gemäß Anspruch 1 gelöst. Zu bevorzugende Weiterbildungen der Erfindung sind Gegenstand der Unteransprüche.

Das erfindungsgemäße Batteriepack, welches insbesondere zum Antrieb eines elektrisch angetriebenen Leichtfahrzeugs oder eines Elektrogerätes dient, weist eine erste Pouch-Zellen-Anordnung und eine zweite Pouch-Zellen-Anordnung auf, welche jeweils eine erste Pouch-Zelle und eine zweite Pouch-Zelle aufweisen.

Die erste Pouch-Zelle und die zweite Pouch-Zelle weisen jeweils eine als Flachkörper ausgestaltete erste Elektrode und eine als Flachkörper ausgestaltete zweite Elektrode auf.

Die erste und die zweite Elektrode können an einer der Schmalseiten der Pouch-Zelle, insbesondere an einer stirnseitigen Schmalseite, angeordnet sein und insbesondere in das Innere des Beutelabschnitts, also durch die Folie hindurch, reichen.

Die erste und die zweite Elektrode können an derselben Schmalseite oder an unterschiedlichen Schmalseiten, insbesondere an zwei sich gegenüberliegenden Schmalseiten, der Pouch-Zelle angeordnet sein. Die erste und die zweite Elektrode können quer zur Stapelrichtung voneinander beabstandet sein. Die Richtung, in der die erste und die zweite Elektrode voneinander beabstandet sind, wenn sie an derselben Schmalseite der Pouch-Zelle angeordnet sind, wird im Folgenden als Breitenrichtung bezeichnet. Die Richtung, in der die erste und die zweite Elektrode voneinander beabstandet sind, wenn sie an gegenüberliegenden Schmalseiten der Pouch-Zelle angeordnet sind, wird im Folgenden als Längsrichtung bezeichnet.

Wenigstens eine Schmalseite der ersten und/oder der zweiten Pouch-Zelle, bevorzugt zwei sich gegenüberliegende Schmalseiten, können eine im Wesentlichen starre Seitenwand aufweisen. Dies erleichtert das Übereinanderstapeln der Pouch-Zellen bzw. ihrer Beutelabschnitte. Insbesondere können die beiden in Breitenrichtung weisenden Schmalseiten mit jeweils einer solchen Seitenwand versehen sein.

Auch die Elektroden können zwei Flachseiten aufweisen, deren Normalenrichtung parallel zur Stapelrichtung verläuft. Die Flachseiten der Elektroden können parallel zu den Flachseiten des Beutelabschnitts verlaufen. Auf diese Weise entsteht eine flache Pouch-Zelle. Die Elektroden können tabförmig, laschenförmig oder als Klemmen ausgestaltet sein.

Der Ausdruck "erste" Elektrode soll keine Aussage über deren Polarität treffen, sondern lediglich die "erste" von der "zweiten" Elektrode begrifflich unterscheiden. Die erste Elektrode der ersten Pouch-Zelle kann folglich den Plus- oder den Minus-Pol der ersten Pouch-Zelle bilden. Entsprechend kann die zweite Elektrode der ersten Pouch-Zelle den Gegenpol, also den Minus- oder den Plus-Pol der ersten Pouch-Zelle bilden. Die Zuordnung der Polaritäten der ersten und zweiten Elektrode der zweiten Pouch-Zelle ist unabhängig von der Zuordnung der Polaritäten zu der ersten und zweiten Elektrode der ersten Pouch-Zelle. So kann beispielsweise die erste Elektrode der ersten Pouch-Zelle den Minus-Pol und die erste Elektrode der zweiten Pouch-Zelle den Plus-Pol der jeweiligen Pouch-Zelle bilden. Ebenso können die ersten Elektroden der ersten und der zweiten Pouch-Zelle jeweils die gleiche Polarität aufweisen.

Eine Vertauschung der Polarität der ersten und der zweiten Elektrode einer Pouch-Zelle gegenüber anderen Pouch-Zellen kann auf einfache Weise durch "Umdrehen" der betreffenden Pouch-Zelle, also durch eine Rotation der Pouch-Zelle um eine zu ihrer Längsrichtung parallele Mittelachse um 180 Grad erfolgen, wenn die Pouch-Zelle aufgrund ihrer geometrischen Gestaltung drehsymmetrisch zu einer solchen Rotation ist.

Vorzugsweise liegen in der Stapelrichtung die erste Elektrode der ersten Pouch-Zelle über der ersten Elektrode der zweiten Pouch-Zelle und die zweite Elektrode der ersten Pouch-Zelle über der zweiten Elektrode der zweiten Pouch-Zelle.

Die erste Elektrode der ersten Pouch-Zelle ist mit der ersten Elektrode der zweiten Pouch-Zelle elektrisch leitend verbunden, und/oder die zweite Elektrode der ersten Pouch-Zelle ist mit der zweiten Elektrode der zweiten Pouch-Zelle elektrisch leitend verbunden.

Wenn die erste Elektrode der ersten Pouch-Zelle mit der ersten Elektrode der zweiten Pouch-Zelle und die zweite Elektrode der ersten Pouch-Zelle mit der zweiten Elektrode der zweiten Pouch-Zelle elektrisch leitend verbunden sind, so ergibt sich bei korrekter Verpolung eine Parallelschaltung der ersten und der zweiten Pouch Zelle. Wenn entweder die erste Elektrode der ersten Pouch-Zelle mit der ersten Elektrode der zweiten Pouch-Zelle oder die zweite Elektrode der ersten Pouch-Zelle mit der zweiten Elektrode der zweiten Pouch-Zelle elektrisch leitend verbunden sind, so ergibt sich bei korrekter Verpolung eine Reihenschaltung der ersten und der zweiten Pouch-Zelle.

In der Pouch-Zellen-Anordnung können die erste und die zweite Pouch-Zelle, insbesondere deren Beutelabschnitte, in der Stapelrichtung übereinanderliegen. Dabei können die Beutelabschnitte direkt aufeinander liegen, beispielsweise indem sich die Folien oder die insbesondere starren Seitenwände der in der Stapelrichtung übereinander liegenden Pouch-Zellen aufeinander abstützen.

Alternativ können sich die erste und die zweite Pouch-Zelle quer zur Stapelrichtung und insbesondere auch quer zur Breitenrichtung bzw. in Längsrichtung gegenüberliegen. In beiden Fällen ist es möglich, die ersten und zweiten Elektroden in Stapelrichtung übereinander anzuordnen.

Aus einer oder mehreren Pouch-Zellen-Anordnungen in einer der obigen Ausgestaltungen lässt sich auf einfache Weise ein Batteriepack aufbauen, das als Energiequelle beispielsweise zum Antrieb eines elektrisch angetriebenen Leichtfahrzeugs oder eines Elektrogerätes dienen kann.

Die erste Pouch-Zellen-Anordnung ist in der Stapelrichtung unmittelbar benachbart zu, insbesondere über der zweiten Pouch-Zellen-Anordnung angeordnet.

Das Batteriepack kann zusätzlich zu der ersten und der zweiten Pouch-Zellen-Anordnung selbstverständlich noch weitere Pouch-Zellen-Anordnungen aufweisen, die in der Stapelrichtung ebenfalls übereinander angeordnet sind.

Weist das Batteriepack mehr als zwei Pouch-Zellen-Anordnungen auf, so kann jedes einzelne Paar eines solchen Batteriepacks von unmittelbar aneinandergrenzenden Pouch-Zellen-Anordnungen als aus einer ersten Pouch-Zellen-Anordnung und einer zweiten Pouch-Zellen-Anordnung aufgebaut angesehen werden.

Eine Pouch-Zellen-Anordnung kann auch aus einer geraden Anzahl von Pouch-Zellen bestehen, die größer als zwei ist. Das ist vorzugsweise immer dann der Fall, wenn die Gesamtspannung des Batteriepacks sich aus einem geraden Vielfachen der Nennspannung der Einzelzellen berechnet. In der Praxis kann das beispielsweise ein E-Bike-Akku sein, der zehn Pouch-Zellen in Reihe geschaltet hat.

Eine einzelne Pouch-Zellen-Anordnung kann auch aus einer ungeraden Anzahl von Pouch-Zellen, zum Beispiel drei, bestehen. Das ist vorzugsweise immer dann der Fall, wenn die Gesamtspannung des Batteriepacks sich aus einem ungeraden Vielfachen der Nennspannung der Einzelzellen berechnet. In der Praxis kann das beispielsweise ein E-Bike-Akku sein, der 13 Pouch-Zellen in Reihe geschaltet hat. In diesem Beispiel wären etwa eine Pouch-Zellen-Anordnung mit drei Pouch-Zellen und fünf Pouch-Zellen-Anordnungen mit jeweils zwei Pouchzellen kombiniert.

Erfindungsgemäß weist das Batteriepack weiterhin wenigstens ein Kompressionsband auf, welches wenigstens teilweise um die erste Pouch-Zellen-Anordnung und die zweite Pouch-Zellen-Anordnung herumgeführt ist, wobei wenigstens zwei auf einander gegenüberliegenden Seiten des Batteriepacks angeordnete Kompressionsabschnitte des Kompressionsbandes in eine jeweilige Richtung verlaufen, welche wenigstens eine zu der Stapelrichtung parallele Komponente aufweist. Das wenigstens eine Kompressionsband komprimiert die ersten Pouch-Zellen und/oder die zweiten Pouch-Zellen der ersten Pouch-Zellen-Anordnung und der zweiten Pouch-Zellen-Anordnung in der Stapelrichtung und setzt diese dadurch unter eine in der Stapelrichtung wirkende Vorspannung.

Durch das wenigstens eine Kompressionsband kann gleichzeitig eine spielfreie Aufnahme der ersten und/oder der zweiten Pouch-Zellen der ersten und der zweiten Pouch-Zellen-Anordnung in dem Batteriepack erreicht werden.

Vorzugsweise wirkt das wenigstens eine Kompressionsband nur entweder auf die ersten oder auf die zweiten Pouch-Zellen, d. h. es komprimiert nur entweder die erste Pouch-Zelle der ersten Pouch-Zellen-Anordnung und die erste Pouch-Zelle der zweiten Pouch-Zellen-Anordnung oder die zweite Pouch-Zelle der ersten Pouch-Zellen-Anordnung und die zweite Pouch-Zelle der zweiten Pouch-Zellen-Anordnung. Das wenigstens eine Kompressionsband kann jedoch auch die gesamten Pouch-Zellen-Anordnungen übergreifen und dann die erste und die zweite Pouch-Zelle der ersten Pouch-Zellen-Anordnung sowie die erste und die zweite Pouch-Zelle der zweiten Pouch-Zellen-Anordnung komprimieren.

Durch die in der Stapelrichtung wirkende Vorspannung wirkt das Kompressionsband somit den bei einer Aufblähung der Pouch-Zellen wirkenden Kräften entgegen. Es stellt somit eine einfache, leichte und kostengünstige Möglichkeit dar, durch die von ihm erzeugte Vorspannung der ersten und der zweiten Pouch-Zellen-Anordnung die Dickenveränderung der Pouch-Zellen zu kontrollieren und zu begrenzen. Gleichzeitig werden die Pouch-Zellen dauerhaft gegeneinander, nicht jedoch gegenüber einem umgebenden Bauteil wie ein Gehäuse, fixiert. Hierdurch wird die eingangs genannte Aufgabe gelöst.

Durch die bei der Befestigung des Kompressionsbandes auf dieses aufgebrachte Zugkraft kann auch die Stärke der Vorspannung in einfacher Weise eingestellt werden.

Das Kompressionsband ist vorzugsweise aus Kunststoff, kann aber auch ganz oder teilweise aus einem anderen Material, beispielsweise aus gewebten und/oder in eine Kunststoffschicht eingebetteten Fasern, beispielsweise Textil-, Kohlenstoff- oder Glasfasern, bestehen, und ist vorzugsweise als selbstklebendes Band ausgeführt.

Das Kompressionsband kann jedoch auch als Riemen ausgeführt sein, dessen Enden durch eine mechanische Verschlusseinrichtung aneinander befestigt sind. Insbesondere kann das Kompressionsband als Kabelbinder ausgeführt sein. Der Verschluss des Kabelbinders ist dann, in einem Querschnitt gesehen, vorzugsweise an einer Ecke des Batteriepacks angeordnet. Durch einfaches Zuziehen und dadurch Spannen des Kabelbinders kann die gewünschte Vorspannung der ersten Pouch-Zellen und/oder der zweiten Pouch-Zellen in sehr kleinen Stufen, entsprechend der Teilung der Zähne des Kabelbinders, eingestellt werden. Im Gegensatz zu einer Ausführung des Kompressionsbandes als Klebeband ist dabei ein Absinken der Vorspannung, beispielsweise durch ein teilweises Lösen der Verklebung infolge einer Erwärmung und damit Erweichung der Klebemasse, ausgeschlossen.

Das Kompressionsband weist vorzugsweise keine oder nur eine geringe Elastizität auf, damit es durch die bei der Aufblähung der Pouch-Zellen wirkenden Kräften nicht gedehnt und dadurch die Vorspannung gemindert wird.

Nachfolgend werden zu bevorzugende Weiterbildungen der Erfindung beschrieben.

In einer bevorzugten Ausführung der Erfindung ist das wenigstens eine Kompressionsband in wenigstens einer, vorzugsweise in wenigstens zwei und weiter vorzugsweise in wenigstens drei vollständigen Umdrehungen um die erste Pouch-Zellen-Anordnung und die zweite Pouch-Zellen-Anordnung herumgeführt.

Wenn das Kompressionsband als selbstklebendes Band ausgeführt ist, kann es somit in der üblichen Anwendung eines Klebebandes nach der wenigstens einen vollständigen Umdrehung auf sich selbst geklebt und damit in definierter Weise fixiert werden.

Durch die Anzahl der vollständigen Umdrehungen kann weiterhin die Zugfestigkeit und damit die Reißfestigkeit des Kompressionsbandes auf das gewünschte Maß erhöht werden.

In einer weiteren bevorzugten Ausführung der Erfindung ist eine in einer senkrecht zu der Stapelrichtung verlaufenden Querrichtung gemessene Breite wenigstens eines der wenigstens zwei Kompressionsabschnitte kleiner als die Gesamtausdehnung des Batteriepacks in der Querrichtung, vorzugsweise kleiner als 30 %, weiter vorzugsweise kleiner als 20 % und noch weiter vorzugsweise kleiner als 10 % der Gesamtausdehnung des Batteriepacks in der Querrichtung.

Die Querrichtung ist dabei vorzugsweise die oben definierte Längsrichtung, kann jedoch auch die oben definierte Breitenrichtung sein.

Aufgrund der gemäß dieser Ausführung der Erfindung relativ geringen Breite des betreffenden Kompressionsabschnitts bleibt entlang der Querrichtung noch genügend Platz an den Seiten des Batteriepacks frei, um dort andere Bauteile, ggf. aber auch die Elektroden der einzelnen Pouch-Zellen selbst, anzuordnen und/oder Anschlüsse aus dem Batteriepack heraus nach außen zu führen. Weiterhin sind auf diese Weise die Pouch-Zellen, insbesondere im Bereich ihrer Elektroden, ggf. auch im Bereich der Leiterplatten, sowie ggf. das Klemmsystem und/oder die Kontaktierungsanordnung, welche alle im Folgenden noch beschrieben werden, zumindest an bestimmten Stellen zugänglich, ohne dass das Kompressionsband ganz oder teilweise entfernt werden muss. Dadurch können beispielsweise Verschraubungen an den Elektroden und ggf. an den Leiterplatten sowie ggf. am Klemmsystem und/oder an der Kontaktierungsanordnung leicht geprüft oder nachgezogen oder einzelne Leiterplatten im Falle eines Defekts leicht ausgetauscht werden.

Selbstverständlich können entlang der Querrichtung auch mehrere Kompressionsbänder nebeneinander angeordnet sein, die jeweils wenigstens teilweise um die beiden Pouch-Zellen-Anordnungen herumgeführt sind. Alternativ oder zusätzlich können ein oder mehrere Kompressionsbänder in einer weiteren senkrecht zu der Stapelrichtung verlaufenden Richtung um die beiden Pouch-Zellen-Anordnungen herumgeführt sein, sodass beispielsweise sowohl in der Längsrichtung als auch in der Breitenrichtung jeweils wenigstens ein Kompressionsband angeordnet ist.

In einer weiteren bevorzugten, zu der zuletzt beschriebenen Ausführung teilweise alternativen Ausführung der Erfindung ist eine in einer senkrecht zu der Stapelrichtung verlaufenden Querrichtung gemessene Breite wenigstens eines der wenigstens zwei Kompressionsabschnitte größer als 5 %, vorzugsweise größer als 10 %, weiter vorzugsweise größer als 20 % und noch weiter vorzugsweise größer als 25 % der Gesamtausdehnung des Batteriepacks in der Querrichtung.

Durch eine derartige Mindestbreite des Kompressionsabschnitts kann sichergestellt werden, dass der Kompressionsabschnitt hinreichend stabil, insbesondere hinreichend reißfest ist. Vorzugsweise ist der gesamte Bereich entlang der Ausdehnung des Batteriepacks in der Querrichtung, in dem keine anderen Bauteile angeordnet sind und der auch nicht aus Gründen der Zugänglichkeit für andere Bauteile frei bleiben soll, von dem Kompressionsabschnitt des Kompressionsbandes ausgefüllt.

In einer weiteren bevorzugten Ausführung der Erfindung ist wenigstens zwischen zwei in der Stapelrichtung gesehen unmittelbar benachbart angeordneten Pouch-Zellen wenigstens ein Kompressionselement aus einem elastischen Material angeordnet, welches dazu eingerichtet ist, bei einer Ausdehnung wenigstens einer der beiden Pouch-Zellen komprimiert zu werden.

Das wenigstens eine Kompressionselement dient dazu, eine Dickenänderung der Pouch-Zellen über deren Lebensdauer im Betrieb des Batteriepacks zu kompensieren, ohne dass die Außenabmessungen des Batteriepacks sich dadurch ändern. Das wenigstens eine Kompressionselement soll also in dem Maße komprimiert werden, wie sich die wenigstens eine an dem Kompressionselement anliegende Pouch-Zelle ausdehnt.

Die Dicke des wenigstens einen Kompressionselements beträgt vorzugsweise 5 % bis 25 % und weiter vorzugsweise 10 % bis 15 % der Dicke des Beutelabschnitts einer der benachbarten Pouch-Zellen im unbenutzten, unverbauten und nicht komprimierten Zustand, also zu Beginn der Lebensdauer der Pouch-Zelle.

Das wenigstens eine Kompressionselement kann ferner dazu dienen, fertigungsbedingte Dickentoleranzen zwischen verschiedenen Pouch-Zellen auszugleichen. Zu diesem Zweck kann die Dicke des wenigstens einen Kompressionselements an die unterschiedlichen Dicken der benachbarten Pouch-Zellen angepasst werden, um deren Toleranzen auszugleichen.

Selbstverständlich kann in einem Stapel von Pouch-Zellen auch zwischen mehreren, vorzugsweise zwischen allen, Paaren von benachbarten Pouch-Zellen jeweils ein Kompressionselement angeordnet sein.

Das wenigstens eine Kompressionselement wird von dem wenigstens einen Kompressionsband ebenfalls komprimiert und unter eine Vorspannung gesetzt. Wenn das Kompressionsband selbst unelastisch ist, wird jedoch nur das Kompressionselement bei einer Ausdehnung der Pouch-Zellen weiter komprimiert und nimmt somit deren Dickenänderung auf, ohne dass die Vorspannung durch das Kompressionsband wegfällt.

Das wenigstens eine Kompressionselement hat vorzugsweise die Form eines flachen Pads mit im Wesentlichen denselben Maßen senkrecht zu der Stapelrichtung wie der Beutelabschnitt der wenigstens einen an dem Kompressionselement anliegenden Pouch-Zelle und ist vorzugsweise aus Gummi oder einem anderen Elastomer gefertigt. Vorzugsweise besitzt das Elastomer eine zellartige Struktur eines Schwamms oder eines Schaums.

In einer bevorzugten Variante der zuletzt beschriebenen Ausführung der Erfindung komprimiert das wenigstens eine Kompressionsband auch das wenigstens eine Kompressionselement in der Stapelrichtung, und eine in der Stapelrichtung gemessene Dicke an einer Stelle des wenigstens einen Kompressionselementes im komprimierten Zustand beträgt zwischen 65 % und 95 %, vorzugsweise zwischen 70 % und 90 %, weiter vorzugsweise zwischen 75 % und 85 % der Dicke des wenigstens einen Kompressionselementes an dieser Stelle im nicht komprimierten Zustand.

Auf diese Weise trägt auch das wenigstens eine Kompressionselement zur Vorspannung des Stapels der Pouch-Zellen bei. Weiterhin lässt sich damit ein genau definierter "Arbeitspunkt" für die weitere Kompression des wenigstens einen Kompressionselementes für dessen weitere Kompression bei einer Ausdehnung der Pouch-Zellen einstellen.

In einer weiteren bevorzugten Variante der zuletzt beschriebenen Ausführung der Erfindung beträgt eine in der Stapelrichtung gemessene Dicke an einer Stelle des wenigstens einen Kompressionselementes im nicht komprimierten Zustand zwischen 5 % und 25 %, vorzugsweise zwischen 8 % und 16 %, weiter vorzugsweise zwischen 10 % und 14 % der Dicke einer in der Stapelrichtung gesehen unmittelbar benachbart angeordneten Pouch-Zelle an dieser Stelle im unkomprimierten Neuzustand.

Durch eine Dimensionierung im Verhältnis zur Dicke der Pouch-Zelle im unkomprimierten Neuzustand lässt sich die Dicke des wenigstens einen Kompressionselementes so wählen, dass sich die erwartete Ausdehnung der Pouch-Zelle über deren gesamte Lebensdauer durch eine entsprechende Kompression des wenigstens einen Kompressionselementes problemlos ausgleichen lässt.

In einer weiteren bevorzugten Ausführung der Erfindung weist das Batteriepack wenigstens eine erste Andruckplatte auf, die dazu eingerichtet ist, gegen einen Beutelabschnitt wenigstens einer in der Stapelrichtung gesehen äußersten Pouch-Zelle des Batteriepacks zu drücken, wobei das wenigstens eine Kompressionsband wenigstens teilweise auch um die wenigstens eine erste Andruckplatte herumgeführt ist.

Die erste Andruckplatte ist vorzugsweise aus Kunststoff gefertigt, kann aber auch aus einem anderen Material, beispielsweise aus Aluminium oder aus einem anderen Metall, bestehen. Die erste Andruckplatte ist vorzugsweise weitgehend oder vollständig starr ausgeführt.

Die erste Andruckplatte kann dazu dienen, die durch das wenigstens eine Kompressionsband erzeugte Kompressionskraft möglichst gleichmäßig auf den Beutelabschnitt der betreffenden äußersten Pouch-Zelle des Batteriepacks zu verteilen. Dies wird dadurch erreicht, dass das Kompressionsband nicht unmittelbar auf die betreffende Pouch-Zelle drückt, sondern wenigstens teilweise um die wenigstens eine erste Andruckplatte herumgeführt ist und somit nur indirekt auf die Pouch-Zelle drückt. Insbesondere wird dadurch vermieden, dass es zu einer nur punktuellen Kompression der Pouch-Zelle kommt, welche sich dann auf die darunterliegenden Pouch-Zellen in dem Batteriepack fortsetzen könnte.

Durch die erste Andruckplatte sind die äußersten und damit gegenüber der Umgebung exponierten Pouch-Zellen in dem Stapel von Pouch-Zellen-Anordnungen auch gegen mechanische Einflüsse durch Stöße oder scharfe Kanten von umgebenden Bauteilen geschützt.

In dem Fall, dass sich die erste und die zweite Pouch-Zelle einer in der Stapelrichtung gesehen äußersten Pouch-Zellen-Anordnung in Längsrichtung gegenüberliegen und somit beide Pouch-Zellen äußerste Pouch-Zellen des Batteriepacks bilden, kann die erste Andruckplatte sich auch gemeinsam über die erste und die zweite Pouch-Zelle erstrecken. Alternativ kann sich eine erste Andruckplatte über die erste Pouch-Zelle und eine weitere erste Andruckplatte über die zweite Pouch-Zelle erstrecken.

In einer bevorzugten Variante dieser Ausführung der Erfindung weist das Batteriepack weiterhin wenigstens eine zweite Andruckplatte auf, die dazu eingerichtet ist, gegen einen Beutelabschnitt einer von der ersten Andruckplatte aus in der Stapelrichtung gesehen gegenüberliegenden äußersten Pouch-Zelle des Batteriepacks zu drücken, wobei das wenigstens eine Kompressionsband wenigstens teilweise auch um die wenigstens eine zweite Andruckplatte herumgeführt ist.

Die zweite Andruckplatte erfüllt somit die gleiche Funktion wie die erste Andruckplatte, aber auf der gegenüberliegenden Seite des Stapels von Pouch-Zellen-Anordnungen in dem Batteriepack. Somit ergeben sich auch die gleichen Ausführungsmöglichkeiten, etwa hinsichtlich des Materials, sowie die entsprechenden Vorteile wie bei der ersten Andruckplatte.

In einer bevorzugten Variante der Ausführung der Erfindung mit einer ersten Andruckplatte und/oder einer zweiten Andruckplatte weist das Batteriepack weiterhin ein Gehäuse auf, in welchem alle anderen Komponenten des Batteriepacks aufgenommen sind. Das Gehäuse steht dabei insbesondere in mittelbar oder unmittelbar berührender Verbindung mit der ersten Andruckplatte bzw. mit der zweiten Andruckplatte und/oder mit wenigstens einem der wenigstens zwei Kompressionsabschnitte des wenigstens einen Kompressionsbandes. Insbesondere ist das Gehäuse zur Montage und/oder Demontage des Batteriepacks relativ zu der ersten Andruckplatte bzw. zu der zweiten Andruckplatte und/oder zu wenigstens einem der wenigstens zwei Kompressionsabschnitte des wenigstens einen Kompressionsbandes insbesondere in einer senkrecht zu der Stapelrichtung verlaufenden Querrichtung verschiebbar.

Das Gehäuse dient in üblicher Weise dem Schutz des Batteriepacks gegen mechanische Einwirkung von außen, gegen unbeabsichtigte elektrische Kontaktierung von außen, gegen das Eindringen von Feuchtigkeit und dadurch erzeugte Kurzschlüsse oder gegen einen unerwünschten Kontakt mit chemischen Substanzen. Umgekehrt dient das Gehäuse auch gegen eine Kontamination der Umgebung des Batteriepacks, beispielsweise infolge eines Auslaufens von Elektrolytflüssigkeit im Falle einer Beschädigung einer Pouch-Zelle.

Das Gehäuse ist in einer Ausgestaltung von einem Profilrohr, beispielsweise einem Strangpress- oder Extrusionsprofil, oder einem gerollten Profil, gebildet. Das Gehäuse kann aus einem Metallwerkstoff, beispielsweise Aluminium oder Magnesium, einem Kunststoff oder einem Verbundwerkstoff gefertigt sein. Es kann insbesondere Teil eines Rahmens eines Leichtfahrzeugs bzw. eines Gehäuses eines Elektrowerkzeugs sein. In dem Gehäuse kann beispielsweise auch ein Batteriemanagement-System angeordnet sein.

Die optionale Verschiebbarkeit des Gehäuses zu der ersten bzw. zweiten Andruckplatte und/oder zu dem Kompressionsabschnitt erleichtert die Montage bzw. Demontage des Batteriepacks, da die von dem Kompressionsband vorgespannten Pouch-Zellen gemeinsam mit den weiteren Bauteilen zur Montage einfach in das Gehäuse hineingeschoben bzw. zur Demontage aus diesem herausgezogen werden können.

In einer bevorzugten Variante dieser Ausführung der Erfindung, bei der das Batteriepack weiterhin eine erste Andruckplatte und/oder eine zweite Andruckplatte aufweist, weist die erste Andruckplatte und/oder die zweite Andruckplatte wenigstens eine, insbesondere elastische, erste Abstützvorrichtung zur Abstützung der ersten Andruckplatte bzw. der zweiten Andruckplatte von innen gegen das Gehäuse auf.

Da die erste bzw. die zweite Andruckplatte gegen eine äußerste Pouch-Zelle und damit indirekt gegen alle Pouch-Zellen in dem Stapel von Pouch-Zellen drückt, werden somit auch alle Pouch-Zellen in dem Batteriepack durch die erste Abstützvorrichtung gegen das Gehäuse abgestützt. Auf diese Weise wird vermieden, dass sich das Batteriepack und insbesondere die einzelnen Pouch-Zellen im Inneren des Gehäuses bewegen können und somit während der Benutzung des Batteriepacks, insbesondere in einem Fahrzeug, innerhalb des Gehäuses wackeln können.

Wenn die erste Abstützvorrichtung elastisch ist, können darüber hinaus auch von außen auf das Gehäuse in der Stapelrichtung wirkende Stöße im Inneren des Gehäuses abgefedert werden, bevor sie auf die einzelnen Pouch-Zellen übertragen werden und diese beschädigen könnten.

Die erste Abstützvorrichtung kann einstückig zusammen mit der ersten bzw. der zweiten Andruckplatte gestaltet sein. Die erste Abstützvorrichtung kann auch als eine elastische Feder, ein Elastomer-Element, ein Zellschaum-Element oder ein anderes elastisches Element ausgeführt sein, welche bzw. welches mit der ersten bzw. mit der zweiten Andruckplatte verbunden ist und von innen gegen das Gehäuse gedrückt wird.

Die erste Abstützvorrichtung kann insbesondere die Form wenigstens einer bzw. eines von der ersten bzw. von der zweiten Andruckplatte nach außen abstehenden Zunge, Schiene, Stange oder Stiftes haben.

In einer bevorzugten Variante der zuletzt beschriebenen Variante der Erfindung, bei der weiterhin die Breite wenigstens eines Kompressionsabschnitts kleiner als die Gesamtausdehnung des Batteriepacks in der Querrichtung ist, ist die wenigstens eine erste Abstützvorrichtung in wenigstens einem Abschnitt des Batteriepacks entlang der Querrichtung angeordnet, in dem nicht das wenigstens eine Kompressionsband angeordnet ist.

Mit anderen Worten ist die wenigstens eine erste Abstützvorrichtung in einer von dem wenigstens einen Kompressionsband entlang der Querrichtung frei gelassenen "Lücke" angeordnet. Selbstverständlich kann die erste Abstützvorrichtung auch aus mehreren Teilen bestehen, die entsprechend in verschiedenen derartigen Lücken angeordnet sind.

Auf diese Weise wird eine Kollision des wenigstens einen Kompressionsbandes und der wenigstens einen ersten Abstützvorrichtung entlang der Querrichtung vermieden. Die Anordnung der ersten Abstützvorrichtung wäre dagegen nur schwer möglich, wenn das wenigstens eine Kompressionsband entlang der gesamten Ausdehnung in Querrichtung des Batteriepacks um die erste und die zweite Pouch-Zellen-Anordnung sowie um die erste bzw. zweite Andruckplatte herumgeführt wäre, denn dann könnte die wenigstens eine erste Abstützvorrichtung nicht direkt mit der ersten bzw. zweiten Andruckplatte verbunden sein.

In einer weiteren bevorzugten Ausführung der Erfindung ist an wenigstens einer Seite des Batteriepacks, an der ein Kompressionsabschnitt des wenigstens einen Kompressionsbandes angeordnet ist, eine, insbesondere starre, Stützfläche zur seitlichen Stützung der ersten Pouch-Zellen und/oder der zweiten Pouch-Zellen der ersten Pouch-Zellen-Anordnung und der zweiten Pouch-Zellen-Anordnung angeordnet.

Die Stützfläche kann wahlweise außerhalb oder innerhalb des Kompressionsabschnitts des wenigstens einen Kompressionsbandes angeordnet sein, da sie nicht für die Kompression des Stapels der Pouch-Zellen-Anordnungen vorgesehen ist.

Die Stützfläche dient insbesondere dem mechanischen Schutz der unter der Stützfläche angeordneten Schmalseiten der Pouch-Zellen. Die Stützfläche kann weiterhin verhindern, dass die flexiblen und daher nur instabil stapelbaren Pouch-Zellen innerhalb des Stapels gegeneinander verrutschen oder verkippen.

Die Stützfläche kann auch mit der ersten oder mit der zweiten Andruckplatte, vorzugsweise im rechten Winkel, zu einem einstückigen Bauteil verbunden sein, welches dann die Form einer im Querschnitt L-förmigen Schale bzw., wenn auf beiden gegenüberliegenden Seiten des Batteriepacks jeweils eine Stützfläche angeordnet ist, einer im Querschnitt U-förmigen Schale aufweist. Entsprechend kann die Stützfläche auf der Seite des Batteriepacks, auf der sie angeordnet ist, zweigeteilt sein, sodass eine Hälfte der Stirnfläche mit der ersten Andruckplatte und die andere Hälfte der Stirnfläche mit der zweiten Andruckplatte jeweils einstückig verbunden ist. In diesem Fall ergeben sich vorzugsweise zwei L-förmige bzw. zwei U-förmige Schalen, welche das Batteriepack von in der Stapelrichtung gesehen einander gegenüberliegenden Seiten des Batteriepacks aus umgreifen.

Auch die Stützfläche ist vorzugsweise aus Kunststoff gefertigt, kann aber auch aus einem anderen Material, beispielsweise aus Aluminium oder aus einem anderen Metall, bestehen. Wenn die Stützfläche mit der ersten oder mit der zweiten Andruckplatte zu einem einstückigen Bauteil verbunden ist, besteht sie vorzugsweise aus dem gleichen Material wie die erste bzw. die zweite Andruckplatte.

In einer bevorzugten Variante der zuletzt beschriebenen Variante der Erfindung, bei der das Batteriepack weiterhin ein Gehäuse aufweist, weist die Stützfläche wenigstens eine, insbesondere starre, zweite Abstützvorrichtung zur Abstützung der Stützfläche von innen gegen das Gehäuse auf.

Die Vorteile der zweiten Abstützvorrichtung sind im Wesentlichen die gleichen wie die der ersten Abstützvorrichtung. Da die zweite Abstützvorrichtung gemeinsam mit der Stützfläche zur seitlichen Stützung der Pouch-Zellen dient und die Pouch-Zellen in dieser Richtung (der Breiten- oder Längsrichtung) nicht komprimiert sind, wirken sich von außen auf das Gehäuse wirkende Stöße nicht so stark auf die Pouch-Zellen aus wie die oben erwähnten Stöße in der Stapelrichtung. Daher kann die zweite Abstützvorrichtung auch starr sein, während die erste Abstützvorrichtung vorzugsweise elastisch ist.

In einer weiteren bevorzugten Ausführung der Erfindung weist das Batteriepack wenigstens eine Stromschiene auf, welche mit einer ersten Elektrode oder einer zweiten Elektrode elektrisch leitend verbunden ist und in einer Richtung, welche senkrecht zu der Stapelrichtung verläuft, zwischen der ersten Elektrode bzw. der zweiten Elektrode und einer Stirnseite des Batteriepacks verläuft.

Die Stromschiene ist insbesondere dann vorteilhaft, wenn sich die ersten und die zweiten Pouch-Zellen der einzelnen Pouch-Zellen-Anordnungen in Längsrichtung gegenüberliegen. Dann sind die ersten und zweiten Elektroden der jeweiligen beiden Pouch-Zellen zwischen deren Beutelabschnitten angeordnet, sodass die Stromschienen eine Möglichkeit darstellen, den Batteriestrom, den Ladestrom oder auch elektrische Signale von den Elektroden zu einer in Längsrichtung gesehen äußeren stirnseitigen Schmalseite des Batteriepacks zu führen, an der beispielsweise ein Batteriemanagement-System und/oder ein Stecker für den elektrischen Anschluss des Batteriepacks angeordnet ist.

Auch die Stromschiene kann wahlweise außerhalb oder innerhalb des Kompressionsabschnitts des wenigstens einen Kompressionsbandes angeordnet sein.

In einer weiteren bevorzugten Ausführung der Erfindung weisen die erste Pouch-Zellen-Anordnung und die zweite Pouch-Zellen-Anordnung jeweils eine in der Stapelrichtung zwischen der ersten Elektrode der ersten Pouch-Zelle und der ersten Elektrode der zweiten Pouch-Zelle angeordnete Leiterplatte und/oder eine in der Stapelrichtung zwischen der zweiten Elektrode der ersten Pouch-Zelle und der zweiten Elektrode der zweiten Pouch-Zelle angeordnete Leiterplatte auf.

Die Leiterplatte kann dabei unterschiedlich ausgestaltet sein: So kann es sich bei der Leiterplatte in üblicher Weise um eine Platine aus einem elektrisch isolierenden Substrat handeln, welche mit elektrisch leitenden Flächen, insbesondere Leiterbahnen, beschichtet ist, oder auch einfach um ein elektrisch leitendes Blech.

Diese Anordnung ermöglicht einen mechanisch stabilen Aufbau der Pouch-Zellen-Anordnung. Die Leiterplatte ist platzsparend zwischen den beiden ersten bzw. zwischen den beiden zweiten Elektroden angeordnet.

Vorzugsweise weist die Leiterplatte eine mit der ersten Elektrode der ersten Pouch-Zelle verbundene Leiterbahn und eine mit der ersten Elektrode der zweiten Pouch-Zelle verbundene Leiterbahn bzw. eine mit der zweiten Elektrode der ersten Pouch-Zelle verbundene Leiterbahn und eine mit der zweiten Elektrode der zweiten Pouch-Zelle verbundene Leiterbahn auf. Die Leiterbahnen ermöglichen eine Strommessung bzw. eine Überwachung der Pouch-Zellen.

Die Pouch-Zellen-Anordnung kann eine oder mehrere Leiterplatten aufweisen. So kann sich eine Leiterplatte in Stapelrichtung sowohl zwischen der ersten Elektrode der ersten Pouch-Zelle und der ersten Elektrode der zweiten Pouch-Zelle als auch zwischen der zweiten Elektrode der ersten Pouch-Zelle und der zweiten Elektrode der zweiten Pouch-Zelle erstrecken, insbesondere wenn sich diese Elektroden auf jeweils derselben Schmalseite der jeweiligen Pouch-Zelle befinden. Alternativ kann sich die Leiterplatte in Breitenrichtung über die gesamte Breite der ersten und der zweiten Pouch-Zelle erstrecken. Oder es kann eine Leiterplatte zwischen der ersten Elektrode der ersten Pouch-Zelle und der ersten Elektrode der zweiten Pouch-Zelle und eine andere, weitere Leiterplatte zwischen der zweiten Elektrode der ersten Pouch-Zelle und der zweiten Elektrode der zweiten Pouch-Zelle angeordnet sein.

Üblicherweise reicht die Leistung und/oder die Kapazität einer einzelnen Pouch-Zelle für einen betriebsgerechten Antrieb eines Leichtfahrzeugs oder eines Elektrogerätes nicht aus. In der Pouch-Zellen-Anordnung müssen daher oft Pouch-Zellen in Reihe oder parallel zusammengeschaltet sein. Eine solche Schaltung erfordert, dass wenigstens eine Elektrode der ersten Pouch-Zelle mit wenigstens einer Elektrode der zweiten Pouch-Zelle elektrisch leitend verbunden ist, beispielsweise der Plus-Pol der ersten Pouch-Zelle mit dem Minus-Pol der zweiten Pouch-Zelle oder der Plus-Pol der ersten Pouch-Zelle mit dem Plus-Pol der zweiten Pouch-Zelle. Bevorzugt stellt die Leiterplatte diese Verbindung zwischen zwei in Stapelrichtung übereinander liegenden Elektroden her, um die Strompfade möglichst kurz zu halten.

So kann in einer Ausgestaltung die Leiterplatte eine Durchkontaktierung aufweisen, die die erste Elektrode der ersten Pouch-Zelle mit der ersten Elektrode der zweiten Pouch-Zelle bzw. die zweite Elektrode der ersten Pouch-Zelle mit der zweiten Elektrode der zweiten Pouch-Zelle in Stapelrichtung elektrisch leitend verbindet. Die Durchkontaktierung kann beispielsweise eine Aussparung der Leiterplatte, durch die ein Zentrierstift hindurchreicht, wenigstens abschnittweise umgeben. Die erste Elektrode der ersten Pouch-Zelle und die erste Elektrode der zweiten Pouch-Zelle bzw. die zweite Elektrode der ersten Pouch-Zelle und die zweite Elektrode der zweiten Pouch-Zelle können an der Durchkontaktierung unmittelbar anliegen.

Alternativ können die erste Elektrode der ersten Pouch-Zelle und die erste Elektrode der zweiten Pouch-Zelle bzw. die zweite Elektrode der ersten Pouch-Zelle und die zweite Elektrode der zweiten Pouch-Zelle auch durch die Leiterplatte galvanisch getrennt sein.

Die Leiterplatte kann an der Stelle, an der die erste bzw. zweite Elektrode der ersten Pouch-Zelle an der Leiterplatte anliegt, und/oder an der Stelle, an der die erste bzw. zweite Elektrode der zweiten Pouch-Zelle an der Leiterplatte anliegt, einen Kontaktbereich aufweisen, der mit einem Stromsensor verbunden ist. Der Kontaktbereich kann von dem Ende einer der oben genannten Leiterbahnen gebildet sein. Jede der Leiterbahnen kann mit einem Stromsensor verbunden sein.

Die Leiterplatte kann elektronische Bauteile aufweisen. Wenigstens ein elektronisches Bauteil kann ausgestaltet sein, die erste Pouch-Zelle und/oder die zweite Pouch-Zelle zu überwachen. Eine solche Überwachung kann beispielsweise mithilfe der oben genannten Leiterbahnen erfolgen.

So kann beispielsweise der oben genannte Stromsensor ausgestaltet sein, eine Spannung und/oder einen Strom der ersten und/oder der zweiten Pouch-Zelle zu messen. Insbesondere kann mit Hilfe eines solchen Stromsensors jede einzelne Pouch-Zelle der Pouch-Zellen-Anordnung separat überwacht werden. Für jede Pouch-Zelle der Pouch-Zellen-Anordnung kann ein separater Stromsensor vorgesehen sein. Der Stromsensor ist dann mit der ersten und/oder der zweiten Elektrode derjenigen Pouch-Zelle verbunden, deren Strom und/oder Spannung er zu messen ausgestaltet ist. Der Stromsensor kann beispielsweise mit der Durchkontaktierung leitend verbunden sein.

In einer Ausgestaltung kann die Leiterplatte wenigstens einen Temperatursensor aufweisen. Insbesondere kann jeder Pouch-Zelle ein eigener, separater Temperatursensor zugeordnet sein. Die Leiterplatte kann eine Wärmebrücke aufweisen, die den Temperatursensor mit der ihm zugeordneten Pouch-Zelle verbindet. Der Temperatursensor kann in einer anderen Ausgestaltung auch unmittelbar an der ihm zugeordneten Pouch-Zelle der Pouch-Zellen-Anordnung, insbesondere dem Beutelabschnitt oder einer der beiden Elektroden der Pouch-Zelle, anliegen.

Eine weitere Ausgestaltung kann vorsehen, dass die Leiterplatte auf der einen in Stapelrichtung weisenden Seite einen Stecker und auf der anderen in Stapelrichtung weisenden Seite einen zum Stecker komplementär ausgestalteten Gegenstecker aufweist, wobei der Stecker und der Gegenstecker in Stapelrichtung in Flucht zueinander angeordnet sein können. Der Stecker und/oder der Gegenstecker können mit dem wenigstens einen Temperatursensor und/oder dem wenigstens einen Stromsensor der Leiterplatte verbunden sein. Der Stecker und der Gegenstecker können mehrpolig ausgestaltet sein und eine identische Polbelegung aufweisen.

Die Anordnung von Stecker und Gegenstecker in Stapelrichtung in Flucht zueinander ermöglicht es, beim Übereinanderstapeln in Stapelrichtung von mehreren Pouch-Zellen-Anordnungen den Stecker der einen Leiterplatte mit dem Gegenstecker der anderen in Stapelrichtung benachbarten Leiterplatte zusammenzustecken.

Stecker und Gegenstecker können insbesondere ausschließlich zur Signalübertragung und nicht zur Übertragung von Leistungsströmen ausgestaltet sein. Beispielsweise können Stecker und Gegenstecker Teil eines Bus-Systems sein, das mit einem Batteriemanagement verbunden ist.

In einer Ausgestaltung sind Stecker und Gegenstecker einer Leiterplatte quer zur Stapelrichtung, insbesondere in Breitenrichtung, zwischen den ersten Elektroden der ersten und der zweiten Pouch-Zelle und den zweiten Elektroden der ersten und der zweiten Pouch-Zelle angeordnet. Diese Anordnung kann insbesondere mittig zwischen diesen beiden Elektrodenpaaren erfolgen. Die Steckrichtung von Stecker und Gegenstecker ist insbesondere parallel zur Stapelrichtung ausgerichtet.

In einer weiteren bevorzugten Ausführung der Erfindung weist das Batteriepack ein Klemmsystem auf,
durch das jeweils mindestens
- die ersten Elektroden (2a, 2b) der beiden Pouch-Zellen (1a, 1b) der ersten Pouch-Zellen-Anordnung (20a), und/oder
- die ersten Elektroden (2a, 2b) der beiden Pouch-Zellen (1a, 1b) der zweiten Pouch-Zellen-Anordnung (20b), und/oder
- die zweiten Elektroden (4a, 4b) der beiden Pouch-Zellen (1a, 1b) der ersten Pouch-Zellen-Anordnung (20a) und/oder
- die zweiten Elektroden (4a, 4b) der beiden Pouch-Zellen (1a, 1b) der zweiten Pouch-Zellen-Anordnung (20b)
in der Stapelrichtung (22) gegeneinander gedrückt sind.

Das Klemmsystem kann je nach Bedarf unterschiedlich ausgestaltet sein. In einer Ausgestaltung kann es beispielsweise die in Stapelrichtung übereinander liegenden ersten und/oder zweiten Elektroden klammerartig umgreifen. In einer Ausgestaltung ist das Klemmsystem wiederholt zerstörungsfrei verwendbar ausgestaltet. Dies bedeutet, dass es beispielsweise abmontiert und wiederverwendet werden kann, wenn eine Pouch-Zelle der Pouch-Zellen-Anordnung ausgetauscht werden muss.

Das Klemmsystem ist in einer Ausgestaltung von der ersten und zweiten Elektrode der ersten und zweiten Pouch-Zelle galvanisch getrennt.

Das Klemmsystem kann alternativ oder kumulativ wenigstens einen sich in Stapelrichtung erstreckenden Haltebolzen, beispielsweise eine Stange oder einen Stift, eine Gewindestange, einen Gewindebolzen oder eine Schraube aufweisen.

Um die vom Klemmsystem in Stapelrichtung aufgebrachte Kraft möglichst zentral auf die Elektroden auszuüben, können die ersten Elektroden der ersten und zweiten Pouch-Zelle und/oder die zweiten Elektroden der ersten und zweiten Pouch-Zelle jeweils eine Aussparung aufweisen, durch die der Haltebolzen ragt. Eine solche Aussparung kann auch die wenigstens eine Leiterplatte aufweisen.

So kann ein erster Haltebolzen die ersten Elektroden der ersten und zweiten Pouch-Zelle und die zwischen diesen beiden ersten Elektroden angeordnete Leiterplatte durchragen. Ein zweiter Haltebolzen kann die zweiten Elektroden der ersten und zweiten Pouch-Zelle und die zwischen diesen beiden zweiten Elektroden angeordnete Leiterplatte durchragen.

Die Aussparung kann als ein Durchgangsloch oder eine Einbuchtung einer Elektrode bzw. einer Leiterplatte ausgestaltet sein. Der erste und/oder zweite Haltebolzen erstreckt sich dann durch das jeweilige Durchgangsloch oder die jeweilige Einbuchtung.

Der wenigstens eine Haltebolzen kann nicht nur dazu genutzt werden, einen in Stapelrichtung mechanischen Verbund herzustellen, sondern auch dazu, die Elektroden und die wenigstens eine Leiterplatte möglichst exakt zueinander auszurichten. Zweckmäßigerweise können an wenigstens einem oder jedem in Stapelrichtung gelegenen Ende des ersten und/oder zweiten Haltebolzens Kopfelemente angeordnet sein, durch die das Batteriepack in Stapelrichtung zusammengehalten ist. Die ersten und zweiten Elektroden der ersten und zweiten Pouch-Zelle mit der dazwischen liegenden Leiterplatte können zwischen zwei Kopfelementen angeordnet sein.

Weist das Klemmsystem eine Gewindeverbindung auf, so bietet dies den Vorteil, dass beispielsweise das Kopfelement wiederholt und ohne Zerstörung der Elektroden und der Pouch-Zellen vom dem ihm zugeordneten Haltebolzen lösbar ist. Der erste und/oder zweite Haltebolzen können ferner zerstörungsfrei aus den Aussparungen entfernbar ausgestaltet sein. Bei dieser Ausgestaltung ist es möglich, den Verbund aus Leiterplatte und Elektroden wiederholt aufzulösen, so dass einzelne Pouch-Zellen der Pouch-Zellen-Anordnung entnehmbar und austauschbar sind. Dies kann beispielsweise dadurch erreicht werden, dass der erste und/oder zweite Haltebolzen als eine Gewindestange, eine Schraube oder ein Bolzen ausgestaltet ist. Das Kopfelement kann beispielsweise ein Schraubenkopf oder eine Mutter sein. Zwischen dem Stapel der ersten Elektroden und/oder dem Stapel der zweiten Elektroden kann eine Stempelplatte angeordnet sein, um die Kraft gleichmäßiger zu verteilen und die Montage zu vereinfachen.

Die Haltebolzen können in einer Ausgestaltung galvanisch von den ersten und/oder zweiten Elektroden der ersten und zweiten Pouch-Zellen getrennt sein. Beispielsweise kann wenigstens einer der Haltebolzen in einer Isolierhülse aus einem Isolierwerkstoff aufgenommen sein. Die Isolierhülse ist zwischen einer Elektrode und dem durch diese Elektrode hindurchreichenden Haltebolzen angeordnet. Dies ist selbstverständlich nur dann notwendig, wenn die Haltebolzen aus einem elektrisch leitenden Werkstoff, beispielsweise einem Metall, gefertigt sind. Die Stifte können jedoch auch aus einem elektrisch nichtleitenden Werkstoff, beispielsweise einem Kunststoff oder einem Verbundwerkstoff, gefertigt sein.

Alternativ kann sich der Haltebolzen auch neben den ersten und/oder zweiten Elektroden in Stapelrichtung erstrecken, so dass er die Elektroden nicht durchragt.

In einer weiteren bevorzugten Ausführung der Erfindung weist das Batteriepack eine Kontaktierungsanordnung auf, welche
- die erste Elektrode oder die zweite Elektrode der ersten Pouch-Zelle der ersten Pouch-Zellen-Anordnung mit der ersten Elektrode bzw. mit der zweiten Elektrode der zweiten Pouch-Zelle der ersten Pouch-Zellen-Anordnung verbindet,
- die erste Elektrode oder die zweite Elektrode der ersten Pouch-Zelle der zweiten Pouch-Zellen-Anordnung mit der ersten Elektrode bzw. mit der zweiten Elektrode der zweiten Pouch-Zelle der zweiten Pouch-Zellen-Anordnung verbindet und
- eine Elektrode der ersten Pouch-Zellen-Anordnung mit einer Elektrode der zweiten Pouch-Zellen-Anordnung verbindet.

Dabei ist eine Elektrode der ersten Pouch-Zellen-Anordnung oder eine Elektrode der zweiten Pouch-Zellen-Anordnung in der Nähe eines Temperatursensors, insbesondere in einer maximalen Entfernung von 30 mm, angeordnet.

Durch die Kontaktierungsanordnung wird die elektrische Verschaltung der Pouch-Zellen miteinander realisiert, insbesondere als Serienschaltung, als Parallelschaltung oder als eine Kombination hiervon.

Die Kontaktierungsanordnung kann wenigstens ein leitendes Distanzstück und wenigstens ein nichtleitendes Distanzstück aufweisen. Die Distanzstücke können beispielsweise als Drehteile, insbesondere als Distanzringe ausgestaltet sein. Die Distanzstücke können jeweils von einem Haltebolzen durchsetzt sein. Hierzu können die Distanzstücke jeweils mit einer Aussparung, insbesondere mit einer Durchgangsöffnung, versehen sein.

Das leitende Distanzstück verbindet zwei in Stapelrichtung unmittelbar übereinander angeordnete Elektroden der ersten und der zweiten Pouch-Zellen-Anordnung elektrisch miteinander, während das nichtleitende Distanzstück zwei in Stapelrichtung unmittelbar übereinander angeordnete Elektroden der ersten und der zweiten Pouch-Zellen-Anordnung voneinander galvanisch trennt.

Beispielsweise verbindet das leitende Distanzstück die erste Elektrode der zweiten Pouch-Zelle der ersten Pouch-Zellen-Anordnung mit der insbesondere in Stapelrichtung unmittelbar gegenüberliegenden ersten Elektrode der ersten Pouch-Zelle der zweiten Pouch-Zellen-Anordnung elektrisch miteinander. Das nichtleitende Distanzstück trennt dann die zweite Elektrode der zweiten Pouch-Zelle der ersten Pouch-Zellen-Anordnung von der zweiten Elektrode der ersten Pouch-Zelle der zweiten Pouch-Zellen-Anordnung.

Alternativ kann das leitende Distanzstück die zweite Elektrode der zweiten Pouch-Zelle der ersten Pouch-Zellen-Anordnung mit der zweiten Elektrode der ersten Pouch-Zelle der zweiten Pouch-Zellen-Anordnung elektrisch miteinander verbinden, während das nichtleitende Distanzstück die erste Elektrode der zweiten Pouch-Zelle der ersten Pouch-Zellen-Anordnung von der ersten Elektrode der ersten Pouch-Zelle der zweiten Pouch-Zellen-Anordnung voneinander galvanisch trennt.

Wiederum alternativ kann ein leitendes Distanzstück die zweite Elektrode der zweiten Pouch-Zelle der ersten Pouch-Zellen-Anordnung mit der zweiten Elektrode der ersten Pouch-Zelle der zweiten Pouch-Zellen-Anordnung elektrisch miteinander verbinden, während ein weiteres leitendes Distanzstück die erste Elektrode der zweiten Pouch-Zelle der ersten Pouch-Zellen-Anordnung mit der insbesondere in Stapelrichtung unmittelbar gegenüberliegenden ersten Elektrode der ersten Pouch-Zelle der zweiten Pouch-Zellen-Anordnung elektrisch miteinander verbindet. Diese Art der Verbindung ermöglicht beispielsweise eine Parallelschaltung von in Stapelrichtung übereinander liegenden Pouch-Zellen-Anordnungen.

Mit diesen alternativen Ausgestaltungen sind folglich beliebige Abfolgen von Reihen- und Parallelschaltungen zwischen übereinander gestapelten Pouch-Zellen-Anordnungen möglich.

Der das nichtleitende Distanzstück durchsetzende Haltebolzen kann durch das nichtleitende Distanzstück von der Leiterplatte galvanisch getrennt sein. Das nichtleitende Distanzstück kann hierzu die Leiterplatte in Stapelrichtung durchsetzen, indem es beispielsweise den Haltebolzen hülsenförmig umgibt. Die Distanzstücke können in Stapelrichtung ineinandergesteckt sein, indem beispielsweise ein hülsenförmiger Fortsatz, der auch die Leiterplatte durchdringen kann, des einen Distanzstückes in Stapelrichtung in eine Aussparung des in Stapelrichtung darauffolgenden Distanzstückes eingeführt ist.

Einzelne oder alle leitenden Distanzstücke können von dem ihn durchsetzenden Haltebolzen durch eine Isolierhülse getrennt sein, die zwischen dem Haltebolzen und dem leitenden Distanzstück angeordnet ist. Die Isolierhülse kann sich einstückig über die Länge des Haltebolzens, über die er die leitenden Distanzstücke durchsetzt, erstrecken. Alternativ kann die Isolierhülse auch aus mehreren in Stapelrichtung aneinandergereihten einzelnen Hülsen aufgebaut sein, was eine modulare Verlängerung der Isolierhülse ermöglicht.

Ein Distanzstück kann auch in einer Pouch-Zellen-Anordnung verwendet werden. Beispielsweise kann eine Pouch-Zellen-Anordnung ein Distanzstück aufweisen, das sich zwischen der zweiten Elektrode der ersten Pouch-Zelle und der zweiten Elektrode der zweiten Pouch-Zelle befindet, während sich die Leiterplatte zwischen der ersten Elektrode der ersten Pouch-Zelle und der ersten Elektrode der zweiten Pouch-Zelle befindet. Das Distanzstück kann leitend oder nicht leitend sein.

Ferner kann insbesondere ein leitendes Distanzstück anstelle oder zusätzlich zu einer Durchkontaktierung der Leiterplatte verwendet werden. In diesem Fall kann die Leiterplatte eine Öffnung aufweisen, die vom Distanzstück durchragt ist. In einer weiteren Ausgestaltung kann sich an einer oder beiden Seiten der Durchkontaktierung ein leitendes Distanzstück befinden, das an der Leiterplatte und an einer der Elektroden einer der Pouch-Zellen der Pouch-Zellen-Anordnung anliegt.

Im Batteriepack kann der Stecker der ersten Pouch-Zellen-Anordnung in den Gegenstecker der zweiten Pouch-Zellen-Anordnung eingesteckt sein.

Bevorzugt sind Stecker und Gegenstecker ausgestaltet, im zusammengesteckten und insbesondere auch beispielsweise formschlüssig gesicherten Zustand in Stapelrichtung beweglich relativ zueinander zu sein, um Bewegungen von Komponenten der Pouch-Zellen-Anordnung relativ zueinander beispielsweise beim Betätigen des Klemmsystems zu ermöglichen.

Die Nähe einer Elektrode zu einem Temperatursensor ermöglicht eine unmittelbare Überwachung der Temperatur dieser Elektrode. Da sich hieraus auch auf die Temperatur im Inneren der betreffenden Pouch-Zelle schließen lässt, lassen sich die Pouch-Zellen auf diese Weise auch gegen Überhitzung schützen. Der Temperatursensor kann mit einem Batterie-Managementsystem verbunden sein, welches bei drohender Überhitzung einer Pouch-Zelle diese abschalten oder eine entsprechende Warnmeldung ausgeben kann.

Das erfindungsgemäße Batteriepack kann, wie oben beschrieben, in einem Leichtfahrzeug als Antriebsbatterie des Antriebsmotors eingesetzt sein. Unter einem Leichtfahrzeug ist ein ein- oder mehrspuriges Fahrzeug oder auch ein Luftfahrzeug mit einem Gesamtgewicht von weniger als 800 kg zu verstehen. Das Leichtfahrzeug kann ferner ein Gehäuse wie oben beschrieben aufweisen, in dem das Batteriepack angeordnet ist.

Nachstehend sind Ausführungsbeispiele exemplarisch mit Bezug auf die beigefügten Zeichnungen erläutert. Dabei können nach Maßgabe der obigen Ausführungen einzelne Merkmale des jeweiligen Ausführungsbeispiels weggelassen werden, wenn es auf den mit diesen Merkmalen verknüpften technischen Effekt bei einer bestimmten Anwendung nicht ankommen sollte. Umgekehrt kann nach Maßgabe der obigen Ausführungen auch einem Ausführungsbeispiel ein dort nicht vorhandenes, oben beschriebenes Merkmal hinzugefügt werden, wenn es bei einer bestimmten Anwendung auf den technischen Effekt ankommt, der mit dem hinzuzufügenden Merkmal verknüpft ist.

In den Figuren werden für Merkmale, die einander hinsichtlich Funktionen und/oder Struktur entsprechen, dieselben Bezugszeichen verwendet.

### Es zeigen:

- Fig. 1: eine schematische Perspektivdarstellung eines Ausführungsbeispiels einer Pouch-Zelle aus dem Stand der Technik;
- Fig. 2: eine schematische Draufsicht auf einen Teil einer Abwandlung der Pouch-Zelle der Fig. 1;
- Fig. 3: eine schematische Perspektivdarstellung eines Ausführungsbeispiels einer Pouch-Zellen-Anordnung aus dem Stand der Technik;
- Fig. 4: eine weitere schematische Perspektivdarstellung der Pouch-Zellen-Anordnung der Fig. 3;
- Fig. 5: eine schematische Perspektivdarstellung eines Batteriepacks aus dem Stand der Technik;
- Fig. 6: eine schematische Seitenansicht des Batteriepacks der Fig. 5;
- Fig. 7: eine schematische Schnittdarstellung entlang der Ebene VII-VII des Batteriepacks der Fig. 5;
- Fig. 8: eine schematische Seitenansicht einer Gehäuseanordnung aus dem Stand der Technik zur Aufnahme eines Batteriepacks;
- Fig. 9: eine schematische Perspektivdarstellung eines Batteriepacks mit Teilen der Gehäuseanordnung aus Fig. 8;
- Fig. 10: eine erste Ausführungsform eines erfindungsgemäßen Batteriepacks in einem Querschnitt senkrecht zur Längsrichtung des Batteriepacks in einer schematischen Darstellung;
- Fig. 11: eine perspektivische Darstellung des gesamten Batteriepacks aus Fig. 10;
- Fig. 12: ein vergrößerter Ausschnitt der ersten Pouch-Zellen-Anordnung des Batteriepacks aus Fig. 10;
- Fig. 13: die Darstellung der ersten Pouch-Zellen-Anordnung aus Fig. 12, in der bestimmte Teile entfernt wurden oder aufgebrochen dargestellt sind;
- Fig. 14: eine weitere Darstellung der ersten Pouch-Zellen-Anordnung des Batteriepacks aus Fig. 10 von der Elektrodenseite aus gesehen;
- Fig. 15: eine weitere Darstellung des Batteriepacks aus Fig. 10 mit besserer Sichtbarkeit des Klemmsystems;
- Fig. 16: eine Darstellung eines erfindungsgemäßen Batteriepacks mit einem Gehäuse;
- Fig. 17: eine zweite Ausführungsform eines erfindungsgemäßen Batteriepacks in einer perspektivischen Darstellung;
- Fig. 18: das Detail "A" aus Fig. 17 in einer vergrößerten Darstellung.

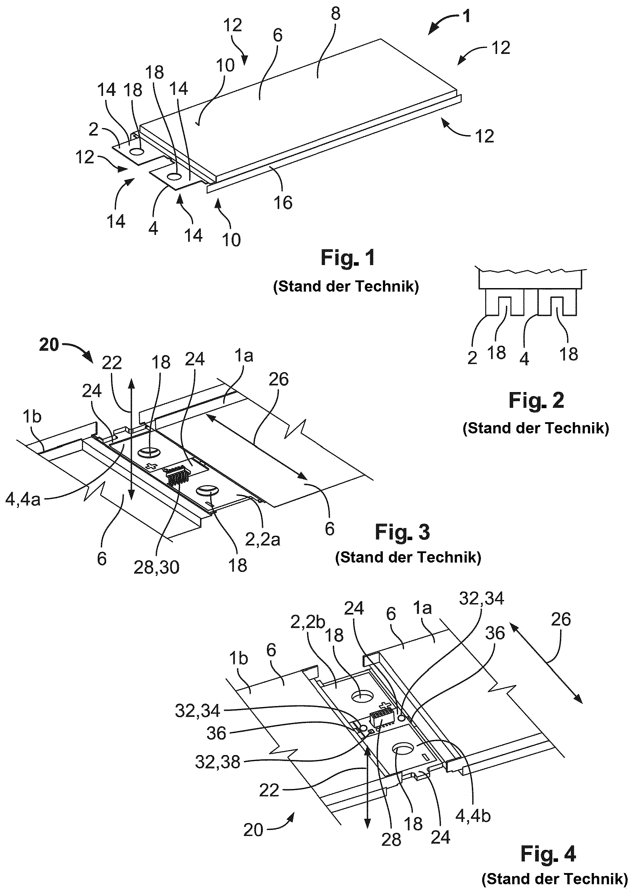

Die Fig. 1 bis 9 zeigen Pouch-Zellen, Pouch-Zellen-Anordnungen und Batteriepacks, welche aus dem Stand der Technik bekannt sind, insbesondere aus der deutschen Patentanmeldung 10 2024 131 846.5 desselben Erfinders (noch unveröffentlicht).

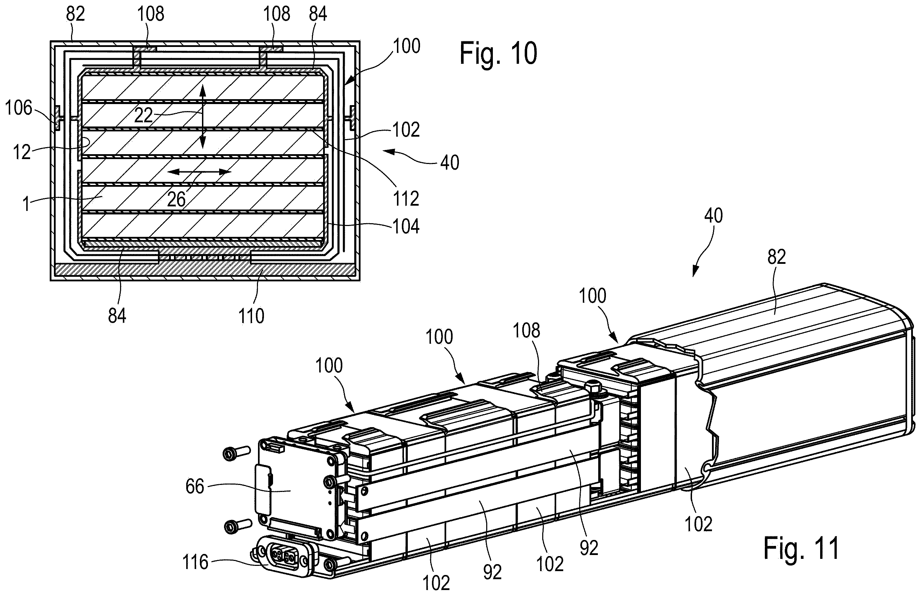

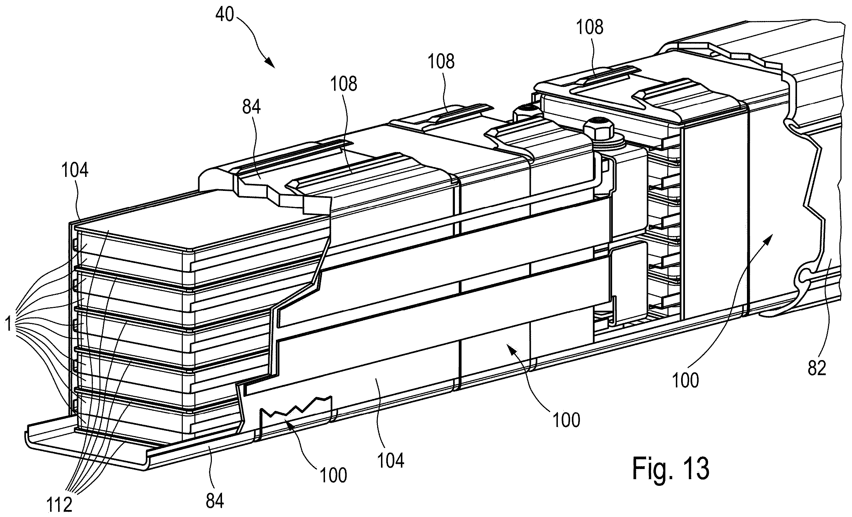

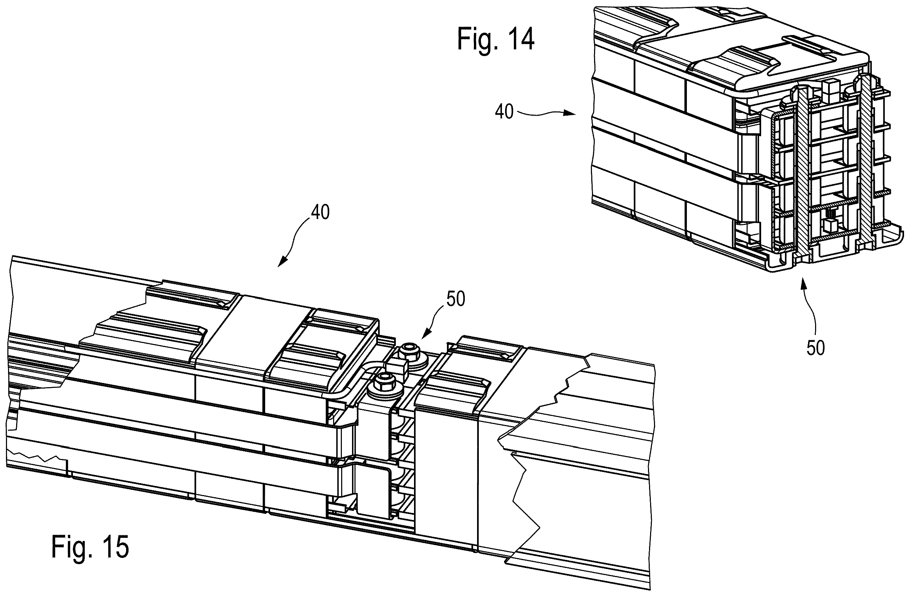

Die Erfindung selbst wird sodann in den Fig. 10 bis 16 bzw. Fig. 17 und 18 anhand von zwei Ausführungsformen eines erfindungsgemäßen Batteriepacks 40 dargestellt.

Fig. 1 zeigt eine Pouch-Zelle 1 aus dem Stand der Technik, die eine erste Elektrode 2 und eine zweite Elektrode 4 aufweist. Die Bezeichnung "erste" Elektrode und "zweite" Elektrode soll die beiden Elektroden 2, 4 lediglich unterscheidbar voneinander machen. Eine bestimmte Zuordnung zu einer Polarität der Elektroden ist mit dieser Bezeichnung nicht verbunden. So kann die erste Elektrode 2 den Pluspol oder den Minuspol der Pouch-Zelle 1 bilden, während die zweite Elektrode dann den entsprechenden Gegenpol bildet.

Die Pouch-Zelle 1 kann ferner einen Beutelabschnitt 6 aufweisen. Im Beutelabschnitt 6 sind die aktiven Schichten der Pouch-Zelle 1 in einer Folie 8 eingeschlossen. Die erste und zweite Elektrode 2, 4 ragen vom Beutelabschnitt 6 weg. Sie können in das Innere des Beutelabschnitts 6 hineinreichen.

Die Pouch-Zelle 1 kann insbesondere zwei sich gegenüberliegende Flachseiten 10 aufweisen, die durch Schmalseiten 12 miteinander verbunden sein können. Die erste und zweite Elektrode 2, 4 können dabei insbesondere von einer stirnseitigen Schmalseite vorragen. An einer oder mehreren Schmalseiten 12, beispielsweise den längeren Schmalseiten 12 bzw. den Schmalseiten 12, die sich an die stirnseitige Schmalseite 12 anschließen, kann der Beutelabschnitt 8 mit starren Seitenwänden 16 versehen sein.

Die erste und zweite Elektrode 2, 4 sind beispielsweise Flachkörper, deren Flachseiten 14 parallel zu den Flachseiten 10 des Beutelabschnitts 6 verlaufen. Die erste Elektrode 2 und die zweite Elektrode 4 können insbesondere klemmenförmig, tabförmig oder, hier gleichbedeutend, laschenförmig ausgestaltet sein.

Die erste und die zweite Elektrode 2, 4 sind jeweils mit einer durchgängigen Aussparung 18 versehen. Die Aussparung 18 kann in Form eines Loches, in Fig. 1 ist dies beispielsweise eine Durchgangsbohrung, ausgestaltet sein.

Fig. 2 zeigt eine alternative Ausgestaltung der Aussparung 18 der ersten und zweiten Elektrode 2, 4, die hier als eine Einbuchtung, beispielsweise in Form eines einseitig offenen Langloches, ausgestaltet ist. Die Aussparungen 18 der beiden Elektroden 2, 4 müssen nicht dieselbe Form aufweisen.

Eine einzelne Pouch-Zelle 1 ist meist nicht ausreichend, um beispielsweise einen Motor eines Leichtfahrzeugs oder eines Elektrogerätes über eine ausreichend lange Zeit anzutreiben oder ausreichend Leistung abzugeben. Deswegen werden mehrere Pouch-Zellen 1 in Reihe und/oder parallel zueinander geschaltet. Auf diese Weise kann dem Motor die erforderliche Spannung und Leistung zur Verfügung gestellt werden.

Die Fig. 3 und 4 zeigen eine Pouch-Zellen-Anordnung 20 aus dem Stand der Technik mit einer ersten Pouch-Zelle 1a und einer zweiten Pouch-Zelle 1b, die zusammengeschaltet sind. Die erste und die zweite Pouch-Zelle 1a, 1b können identisch ausgestaltet sein.

Insofern im Folgenden zwischen den einzelnen ersten Elektroden 2 und den einzelnen zweiten Elektroden 4 der Pouch-Zellen 1a, 1b unterschieden werden muss, gilt Folgendes. Mit 2a ist die erste Elektrode der ersten Pouch-Zelle 1a und mit 2b die erste Elektrode der zweiten Pouch-Zelle 1b bezeichnet. Mit 4a ist die zweite Elektrode der ersten Pouch-Zelle 1a und mit 4b die zweite Elektrode der zweiten Pouch-Zelle 1b bezeichnet. Sofern es auf diese Unterscheidung nicht ankommt, werden die Bezugszeichen 2, 4 verwendet. Dies gilt auch für die Pouch-Zellen 1a, 1b, die unter dem Bezugszeichen 1 zusammengefasst sind.

In der dargestellten Ausgestaltung überlappen sich in Stapelrichtung 22 die erste Elektrode 2a und die erste Elektrode 2b der ersten bzw. zweiten Pouch-Zelle 1a, 1b. Ebenso überlappen sich in Stapelrichtung 22 die zweite Elektrode 4a und die zweite Elektrode 4b der ersten bzw. zweiten Pouch-Zelle 1a, 1b. Insbesondere können die erste und die zweite Pouch-Zelle 1a, 1b so angeordnet sein, dass die Aussparungen 18 der jeweiligen Elektroden 2, 4 in der Stapelrichtung 22 miteinander fluchten. Die Stapelrichtung 22 kann senkrecht zu den Flachseiten 10, 14 verlaufen.

Hierbei ist die Zuordnung der ersten und zweiten Elektroden 2, 4 der Pouch-Zellen 1a, 1b zu den Polaritäten Plus und Minus von der jeweiligen Anwendung abhängig. So können beispielsweise die in Stapelrichtung 22 übereinander angeordneten Elektroden 2a, 2b die gleiche oder entgegengesetzte Polarität haben.

In Fig. 3 und 4 ist die sich quer zur Stapelrichtung 22 gegenüberliegende Anordnung der beiden Beutelabschnitte 6 lediglich beispielhaft. Eine in Stapelrichtung 22 übereinanderliegende Anordnung der Elektroden 2a, 2b bzw. 4a, 4b lässt sich auch erreichen, wenn auch die Beutelabschnitte 6 der Pouch-Zellen 1a, 1b in Stapelrichtung 22 übereinander bzw. unmittelbar aufeinander liegen.

Zwischen den beiden ersten Elektroden 2a, 2b und/oder zwischen den beiden zweiten Elektroden 4a, 4b ist eine Leiterplatte 24 angeordnet. Insbesondere kann sich die Leiterplatte 24 zwischen sowohl die ersten Elektroden 2a, 2b als auch die zweiten Elektroden 4a, 4b erstrecken.

In einer Breitenrichtung 26, in der die erste und zweite Elektrode 2, 4 einer einzelnen Pouch-Zelle 1 voneinander beabstandet sind, kann die Leiterplatte 24 zu beiden Seiten über die ersten und zweiten Elektroden 2a, 2b, 4a, 4b ragen. Die Breitenrichtung 26 verläuft insbesondere parallel zu den Flachseiten 10, 14 und senkrecht zur Stapelrichtung 22.

Die Leiterplatte 24 kann ebenfalls mit einer Aussparung 18 versehen sein, die in der Pouch-Zellen-Anordnung 20 mit einer der Aussparungen 18 der jeweiligen ersten und zweiten Elektroden 2a, 2b oder 4a, 4b fluchtet. Insbesondere kann die Leiterplatte 24 zwei Aussparungen 18 aufweisen. In diesem Fall fluchtet eine der beiden Aussparungen 18 mit der Aussparung 18 der ersten Elektroden 2a, 2b und die andere der beiden Aussparungen 18 mit der Aussparung 18 der zweiten Elektroden 4a, 4b. Die Aussparungen 18 der Leiterplatte 24 können eine andere Form aufweisen als die Aussparungen 18 der Elektroden 2, 4.

Die Leiterplatte 24 kann an einer Seite mit einem beispielsweise mehrpoligen Stecker 28 versehen sein, der mit einem komplementär ausgestalteten Gegenstecker 28 in einer Steckrichtung 22 (identisch mit der Stapelrichtung 22) zusammensteckbar ist.

Die Leiterplatte 24 weist auf ihren beiden in Stapelrichtung 22 gelegenen Seiten jeweils einen Stecker 28 auf, der zwei- oder mehrpolig ausgestaltet sein kann. Dabei ist in einer Ausgestaltung der eine Stecker 28 auf der einen in Stapelrichtung 22 gelegenen Seite der Leiterplatte 24 als der zu dem Stecker 28 auf der anderen in Stapelrichtung 22 gelegenen Seite der Leiterplatte 24 komplementäre Gegenstecker 30 ausgestaltet. Die Stecker 28, 30 sind in Stapelrichtung 22 fluchtend angeordnet, so dass die Stecker 28, 30 zweier in Stapelrichtung 22 übereinanderliegender Leiterplatten 24 zusammengesteckt werden können, wenn die Aussparungen 18 miteinander fluchten. Insbesondere können die Stecker 28, 30 in der Pouch-Zellen-Anordnung 20 zwischen den Elektroden 2a, 2b bzw. 4a, 4b liegen, beispielsweise in Breitenrichtung 26 mittig oder außermittig zwischen den ersten Elektroden 2a, 2b auf der einen und zwischen den zweiten Elektroden 4a, 4b auf der anderen Seite. Selbstverständlich können die Stecker 28, 30 in Breitenrichtung 26 auch an einer der beiden Seiten der beiden Elektrodenpaare 2a, 2b und 4a, 4b angeordnet sein, also beispielsweise links oder rechts von den ersten oder zweiten Elektroden 2, 4.

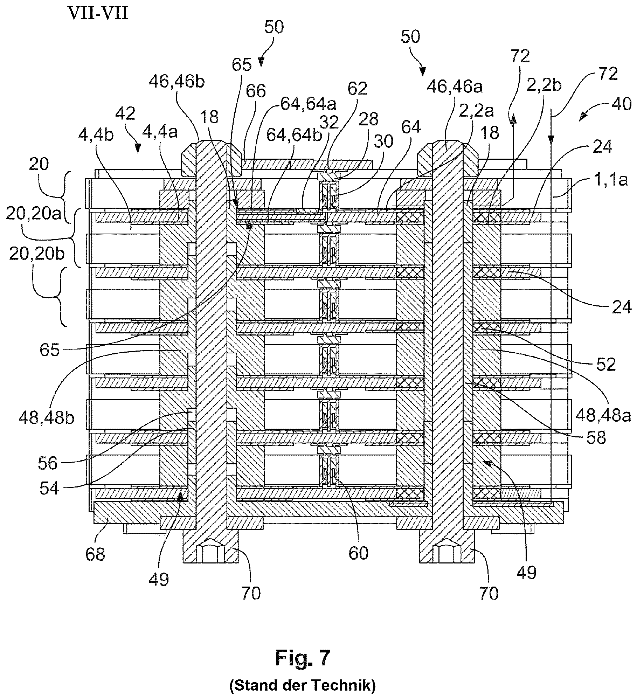

Die Leiterplatte 24 kann elektronische Bauelemente 32 aufweisen. In einer anderen Ausgestaltung kann die Leiterplatte 24 jedoch auch nur Leiterbahnen aufweisen, die mit an anderer Stelle angeordneten elektronischen Bauelementen verbunden sind. Derartige Bauelemente können beispielsweise in einem baulich getrennten Batteriemanagement-System (Bezugszeichen 66, Fig. 7) untergebracht sein.

Beispielsweise kann die Leiterplatte 24 elektronische Bauelemente 32 in Form eines oder mehrerer Temperatursensoren 34 aufweisen. In einer Ausgestaltung kann jeder der Pouch-Zellen 1a, 1b ein eigener, insbesondere anderer Temperatursensor 34 zugeordnet sein. Mittels des wenigstens einen Temperatursensors 34 lässt sich die Temperatur wenigstens einer Pouch-Zelle 1a, 1b überwachen. Es können in einer Ausführung zwei Temperatursensoren 34 angeordnet sein, von denen der eine Temperatursensor 34 ausgestaltet ist, die Temperatur der Pouch-Zelle 1a zu erfassen, und der andere Temperatursensor 34 ausgestaltet ist, die Temperatur der zweiten Pouch-Zelle 1b zu erfassen. Der wenigstens eine Temperatursensor 34 kann mit der Pouch-Zelle 1a, 1b, insbesondere mit der ersten oder zweiten Elektrode 2, 4 dieser Pouch-Zelle 1a, 1b, verbunden sein. Insbesondere kann der wenigstens eine Temperatursensor 34 über eine Wärmebrücke 36 mit der ersten und/oder zweiten Pouch-Zelle 1a, 1b verbunden sein.

Die Leiterplatte 24 kann als elektronisches Bauelement 32 ferner wenigstens einen Stromsensor 38 aufweisen, der ausgestaltet ist, die von der Pouch-Zellen-Anordnung 20 erzeugte Spannung und/oder Stromstärke zu erfassen.

Die Stecker 28, 30 dienen zur Übertragung von Signalen, die von einem Batteriemanagement-System (Bezugszeichen 66 in Fig. 7), beispielsweise einem Computer, empfangen werden. So sind beispielsweise die Signalausgänge der elektronischen Bauelemente 32, beispielsweise des wenigstens einen Temperatursensors 34 und/oder des Stromsensors 38, mit einem oder mehreren Polen des Steckers 28 und des Gegensteckers 30 verbunden, so dass die von dem wenigstens einen Temperatursensor 34 und/oder Stromsensor 38 gelieferten Signale am Stecker 28 und Gegenstecker 30 abgreifbar sind. Die Pouch-Zellen-Anordnung 20 kann insbesondere ausgestaltet sein, mittels der Stecker 28, 30 an ein Bus-System, beispielsweise an einen CAN-Bus oder ein anderes System, angeschlossen zu werden. Ein entsprechender Baustein zur Ankopplung des wenigstens einen elektronischen Bauteils 32 an das Bus-System kann ebenfalls von der Leiterplatte 24 umfasst sein.

Wird kein Bus-System verwendet, so kann jedes elektronische Bauteil 32 mit einem anderen Pin des Steckers 32 bzw. des Gegensteckers 30 verbunden sein. Dies ist beispielsweise dann notwendig, wenn die Signale der elektronischen Bauteile 32 rein analog übertragen werden.

Einzelne oder alle Elektroden 2, 4 der Pouch-Zellen 1a, 1b können unmittelbar an der Leiterplatte 24 anliegen.

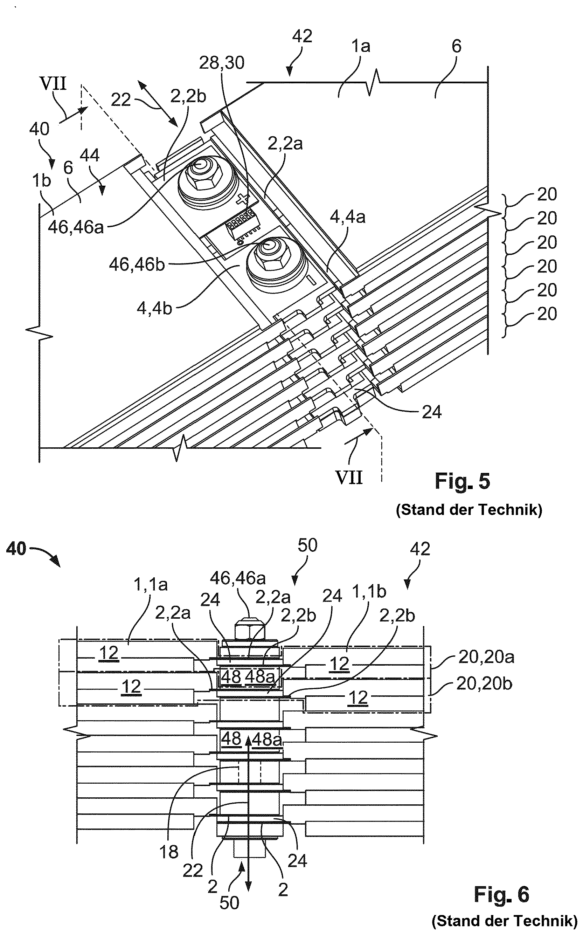

Fig. 5 zeigt ein Batteriepack 40 aus dem Stand der Technik, das aus einer Mehrzahl von Pouch-Zellen-Anordnungen 20 zusammengesetzt ist, wie sie in den Fig. 3 und 4 gezeigt sind. Die Anzahl und Anordnung der Pouch-Zellen-Anordnungen 20 im Batteriepack 40 ist anwendungsabhängig. Es sind jedoch wenigstens zwei Pouch-Zellen-Anordnungen 20 vom Batteriepack 40 umfasst.

Die Pouch-Zellen 1a, 1b liegen sich in einer Ausgestaltung im Batteriepack 40 quer zur Stapelrichtung 22 gegenüber, wobei die Elektroden 2, 4 der beiden Pouch-Zellen 1a, 1b zwischen den Beutelabschnitten 6 der Pouch-Zellen 1a, 1b angeordnet sind. Dadurch können sich in Stapelrichtung 22 zwei Stapel 42, 44 bilden. Alternativ kann auch nur ein einziger Stapel 42 oder 44 vorhanden sein.

In einem Stapel 42, 44 liegen die Seitenwände 16 der Beutelbereiche 6 der in Stapelrichtung 22 übereinanderliegenden Pouch-Zellen 1a oder 1b bevorzugt unmittelbar aufeinander. Auf diese Weise erhält jeder Stapel 40, 42 eine definierte Höhe.

So liegen beispielsweise die ersten Pouch-Zellen 1a der Pouch-Zellen-Anordnungen 20 mit ihren jeweiligen Beutelabschnitten 6 in Stapelrichtung 22 übereinander und bilden so einen ersten Stapel 42, während die zweiten Pouch-Zellen 1b der Pouch-Zellen-Anordnungen 20 unter Bildung eines zweiten Stapels 44 mit ihren Beutelabschnitten 6 in Stapelrichtung 22 übereinanderliegen. Die einzelnen Stapelanordnungen 20 des Batteriepacks 40 können in einer Ausgestaltung identisch ausgestaltet sein.

Die ersten Elektroden 2 sämtlicher erster und zweiter Pouch-Zellen 1a, 1b des Batteriepacks 40 liegen in Stapelrichtung 22 so übereinander, dass deren Ausnehmungen 18 (in Fig. 5 nicht zu erkennen) in Stapelrichtung 22 miteinander fluchten. Das gleiche gilt für die zweiten Elektroden 4 sämtlicher Pouch-Zellen 1a, 1b des Batteriepacks 40. Auf diese Weise kann jeweils ein Haltebolzen 46 durch die in Stapelrichtung fluchtenden Aussparungen 18 der ersten Elektroden 2 bzw. der zweiten Elektroden 4 durchgesteckt werden. Beispielsweise wird ein erster Haltebolzen 46a durch die Aussparungen 18 der in Stapelrichtung 22 übereinanderliegenden ersten Elektroden 2 gesteckt. Ein zweiter Haltebolzen 46b kann durch die Aussparungen 18 der in Stapelrichtung 22 übereinanderliegenden zweiten Elektroden 4 gesteckt sein. Der erste und/oder der zweite Haltebolzen 46a, 46b kann aus einem nichtleitenden oder leitenden Material hergestellt sein. So kann beispielsweise jeder der Haltebolzen 46a, 46b eine Gewindestange oder eine Schraube aus Metall, einem Kunststoff oder einem Verbundwerkstoff sein. Ist der Haltebolzen 46a und/oder der Haltebolzen 46b aus einem leitenden Material gebildet, so kann er galvanisch von den Elektroden 2, 4, durch die er hindurchreicht, getrennt sein.

Die Stecker 28 und Gegenstecker 30 der Leiterplatten 24 des Batteriepacks 40 sind miteinander verbunden. Über den Stecker 28 bzw. Gegenstecker 30 der in Stapelrichtung 22 zuoberst oder zuunterst angeordneten Leiterplatte 24 kann der Zugriff auf jedes einzelne elektronische Bauelement 32 einer jeden Leiterplatte 24 möglich sein.

Wie Fig. 6 zeigt, befindet sich zwischen jeweils einer ersten Pouch-Zellen-Anordnung 20a der Pouch-Zellen-Anordnungen 20 eines Batteriepacks 40 und einer in Stapelrichtung 22 dazu benachbarten zweiten Pouch-Zellen-Anordnung 20b der Pouch-Zellen-Anordnungen 20 des Batteriepacks 40 ein Distanzstück 48, das insbesondere ringförmig, also als Distanzring ausgestaltet sein kann. Das Distanzstück 48 kann in Stapelrichtung 22 vom Haltebolzen 46 durchsetzt sein. Insbesondere liegen die in Stapelrichtung 22 sich gegenüberliegenden Elektroden 2, 4 der ersten und der zweiten Pouch-Zellen-Anordnung 20a, 20b an dem Distanzstück 48 an. Die Distanzstücke 48 sind Teil einer Kontaktierungsanordnung 49, mit der aus wenigstens zwei Pouch-Zellen-Anordnungen 20 ein Batteriepack 40 zusammengesetzt werden kann.

In einer Ausgestaltung sind die ersten, in Stapelrichtung 22 untereinander angeordneten Elektroden 2 von in Stapelrichtung 22 aufeinanderfolgenden Pouch-Zellen-Anordnungen 20 durch jeweils ein erstes Distanzstück 48a getrennt. Das erste Distanzstück 48a liegt folglich zwischen den beiden in Stapelrichtung 22 benachbarten ersten Elektroden 2a, 2b der ersten und zweiten Pouch-Zellen-Anordnung 20a, 20b.

Entsprechend kann ein zweites Distanzstück 48b zwischen den sich in Stapelrichtung 22 unmittelbar gegenüberliegenden zweiten Elektroden 4a, 4b der ersten Pouch-Zellen-Anordnung 20a und der zweiten Pouch-Zellen-Anordnung 20b angeordnet sein.

Je nachdem, ob die an einem Distanzstück 48a, 48b anliegenden ersten oder zweiten Elektroden 2, 4 elektrisch leitend miteinander verbunden oder voneinander galvanisch getrennt werden sollen, ist das Distanzstück 48 aus einem elektrisch leitenden Werkstoff, beispielsweise aus Aluminium, Kupfer oder einer aluminium- und/oder kupferhaltigen Legierung, oder aus einem elektrischen Isolierwerkstoff, beispielsweise Keramik oder Kunststoff, gefertigt. In einer Ausgestaltung sind die Distanzstücke 48 Drehteile.

In einer Ausgestaltung können die Distanzstücke 48 jeweils mit einer Aussparung 18 versehen sein, die mit den Aussparungen 18 der angrenzenden Elektroden 2, 4 und der Aussparung 18 der in Stapelrichtung 22 überlappend angeordneten Leiterplatten 24 fluchtet.

Die Haltebolzen 46a, 46b dienen - insbesondere zusammen mit den Distanzstücken 48 - dem mechanischen Zusammenhalt und der Ausrichtung der Elektroden 2, 4 und der Leiterplatten 24 sowie der Pouch-Zellen-Anordnungen 20. Die Haltebolzen 46a, 46b sind Teil eines Klemmsystems 50.

Das Klemmsystem 50 kann insbesondere ausgestaltet sein, eine wiederholt lösbare mechanische Verbindung der Elektroden 2, 4 mit den Leiterplatten 24 herzustellen. Hierzu kann jeder Haltebolzen 46a, 46b eine Schraubverbindung bereitstellen. Eine solche Schraubverbindung ist leicht und mehrfach zu lösen, so dass jede einzelne Pouch-Zelle 1a, 1b austauschbar ist. Dabei muss nicht notwendigerweise eine hohe Klemmkraft in Stapelrichtung 22 aufgebracht werden.

Fig. 7 zeigt eine schematische Schnittansicht entlang der Pfeile VII-VII der Fig. 5. Die in Stapelrichtung 22 unmittelbar untereinander liegenden ersten Elektroden 2 des Stapels 42 sind alle elektrisch leitend miteinander verbunden. Je nachdem, ob die erste Elektrode 2a der ersten Pouch-Zelle 1a und die in Stapelrichtung 22 damit überlappend angeordnete erste Elektrode 2b der zweiten Pouch-Zelle 1b die gleiche oder die entgegengesetzte Polarität aufweisen, lassen sich mit dem in Fig. 7 gezeigten Aufbau Parallel- und Reihenschaltungen der Pouch-Zellen-Anordnungen 20 beliebig kombinieren und aufbauen. Die zweiten Elektroden 4 des Batteriepacks 40 sind galvanisch allesamt voneinander getrennt.

Um die beiden ersten Elektroden 2a, 2b (oder alternativ die zweiten Elektroden 4a, 4b) einer Pouch-Zellen-Anordnung 20 elektrisch miteinander zu verbinden, kann die Leiterplatte 24 mit einer Durchkontaktierung 52 versehen sein. Die Durchkontaktierung 52 kann insbesondere die Aussparung 18 zumindest abschnittsweise umgeben.

Die ersten Elektroden 2a, 2b einer Pouch-Zellen-Anordnung 20 können in einer Ausgestaltung an der Durchkontaktierung 52 mittelbar oder unmittelbar anliegen. Die Elektroden 2 sind somit elektrisch leitend miteinander verbunden. Die in Stapelrichtung 22 aufeinanderfolgenden ersten Elektroden 2 zweier unterschiedlicher Pouch-Zellen-Anordnungen 20 sind durch ein elektrisch leitendes Distanzstück 48a elektrisch miteinander verbunden.

Die Distanzstücke 48a, welche in Stapelrichtung 22 aufeinanderfolgende erste Elektroden 2 zweier aufeinanderfolgender Pouch-Zellen-Anordnungen 20 miteinander verbinden, sind elektrisch leitend ausgestaltet.

Die Distanzstücke 48b, die an den in Stapelrichtung 22 aufeinanderfolgenden zweiten Elektroden 4 zweier in Stapelrichtung 22 benachbarter Pouch-Zellen-Anordnungen 20 anliegen, sind in der in Fig. 7 beispielhaft dargestellten Ausgestaltung nichtleitend. Außerdem fehlt der Leiterplatte 24 in dem Bereich, an dem die zweiten Elektroden 4 an der Leiterplatte 24 anliegen, eine Durchkontaktierung.

Die Distanzstücke 48b können einen durch die Aussparung 18 hindurchreichenden Abschnitt 52 aufweisen, der das auf der in Stapelrichtung 22 anderen Seite der Leiterplatte 24 angeordnete Distanzstück 48b kontaktiert. Beispielsweise kann der Abschnitt 52 in eine Aufnahme 54 des Distanzstückes 48b auf der in Stapelrichtung 22 anderen Seite der Leiterplatte 24 eingeführt sein. Damit ist die Leiterplatte 24 vom Haltebolzen 46b in Stapelrichtung 22 durchgängig galvanisch getrennt.

Eine solche Ausgestaltung ist auch bei den leitenden Distanzstücken 48a möglich.

Um die Haltebolzen 46a, die durch die Durchkontaktierungen 52 hindurchreichen, galvanisch von den Elektroden 2 und den Distanzstücken 48a zu trennen, kann zwischen dem Haltebolzen 46a und der Durchkontaktierung 52 eine Isolierhülse 58 angeordnet sein, die sich durch sämtliche Aussparungen 18, die vom Haltebolzen 46a durchdrungen sind, einstückig erstrecken kann. Alternativ kann die Isolierhülse 58 auch aus in Stapelrichtung 22 übereinanderliegenden Ringabschnitten gebildet sein, so dass sie sich leichter modular verlängern lässt. Die Höhe eines Ringabschnitts in Stapelrichtung 22 entspricht dabei der Höhe einer Pouch-Zellen-Anordnung 20.

An einem Ende der in Stapelrichtung 22 zusammengesteckten Stecker 28 und Gegenstecker 30 kann ein Abschlussstecker 60 vorgesehen sein. Am anderen in Stapelrichtung 22 gelegenen Ende kann ein Anschluss 62 an das Batteriemanagement-System 66 angeschlossen sein. Auch wenn die an einer Leiterplatte 24 anliegenden zweiten Elektroden 4a, 4b nicht über die Leiterplatte 24 miteinander verbunden sind, kann die Leiterplatte 24 Leiterbahnen 64 aufweisen, die mit jeweils einer der zweiten Elektroden 4a, 4b verbunden sind.

Beispielsweise kann eine Leiterbahn 64a mit der zweiten Elektrode 4a der ersten Pouch-Zelle 1a einer Pouch-Zellen-Anordnung 20 und eine Leiterbahn 64b mit der zweiten Elektrode 4b der zweiten Pouch-Zelle 1b der Pouch-Zellen-Anordnung 20 leitend verbunden sein, beispielsweise indem die Elektroden 4a, 4b, an den entsprechenden Leiterbahnen 64a, 64b anliegen. Die Leiterbahnen 64a, 64b können mit elektronischen Bauteilen 32, wie sie oben beschrieben sind, verbunden sein. Jede Leiterbahn 64, 64a, 64b kann in einem Kontaktbereich 65 enden, der eine der dort anliegenden Elektroden 2, 4 kontaktiert. Auch die Durchkontaktierung 52 kann über eine Leiterbahn 64 der Leiterplatte 24 mit einem elektronischen Bauteil 32 verbunden sein.

An einem in Stapelrichtung 22 gelegenen Ende des Batteriepacks 40 kann eine Abschlussplatte 68 aus einem elektrisch isolierenden Werkstoff vorgesehen sein. Die Abschlussplatte 68 kann sich über die gesamte oder nur einen Teil der Grundfläche des Batteriepacks 40 erstrecken. Die Pouch-Zellen-Anordnungen 20 sind zwischen der Abschlussplatte 68 und einem Kopfabschnitt 70, beispielsweise einem Schraubenkopf oder einer Mutter des Klemmsystems 50, auf der Unterseite des Batteriepacks 40 einerseits und einem entsprechenden Schraubenkopf oder einer Mutter auf der gegenüberliegenden Oberseite des Batteriepacks 40 andererseits angeordnet. An dem der Abschlussplatte 68 in Stapelrichtung gegenüberliegenden Ende können sich sämtliche elektrischen und elektronischen Anschlüsse für das Batteriepack 40 befinden, wie beispielsweise der Anschluss 62. Zu dieser Seite können auch die Anschlusspole 72 des Batteriepacks 40 zugänglich angeordnet sein.

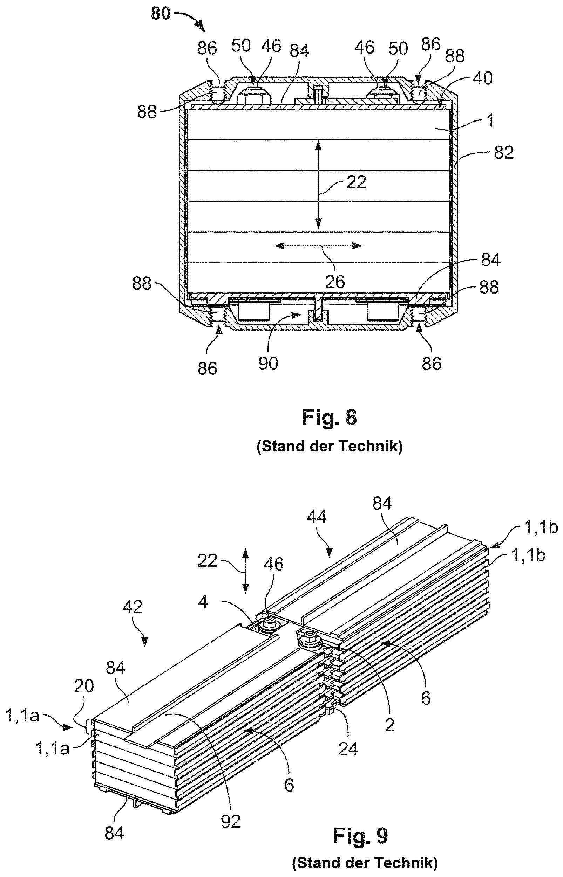

Fig. 8 zeigt einen Schnitt durch eine Gehäuseanordnung 80 aus dem Stand der Technik zur Aufnahme des Batteriepacks 40. Die Gehäuseanordnung 80 weist ein Gehäuse 82 auf, das beispielsweise aus einem Extrusionsprofil, wie einem Aluminium-Extrusionsprofil, einem Kunststoff-Extrusionsprofil oder einem Profil aus Verbundwerkstoff, beispielsweise enthaltend Carbonfasern, hergestellt ist. Das Gehäuse 82 kann beispielsweise von einem Rohr eines Rahmens eines Leichtfahrzeugs, wie einem E-Bike oder einem Elektroroller, oder von einem Gehäuse eines Elektrogerätes gebildet sein.

Das Batteriepack 40 kann beispielsweise quer zur Stapelrichtung 22, insbesondere in der Richtung, in der sich die Pouch-Zellen 1a, 1b einer Pouch-Zellen-Anordnung 20 gegenüberliegen (wie in Fig. 3 und 4 gezeigt), in das Gehäuse 82 eingeschoben sein.

Damit sich die Beutelbereiche 6 (Fig. 1) der Pouch-Zellen 1 nicht aufblähen können und das Batteriepack 40 sicher im Gehäuse 82 fixiert ist, kann eine Andruckplatte 84 vorgesehen sein, die an einem in Stapelrichtung 22 gelegenen Ende des Batteriepacks 40 angeordnet ist. Die Andruckplatte 84 liegt in einer Ausgestaltung insbesondere unter Kraft ausschließlich am Beutelbereich 6 der in Stapelrichtung 22 untersten oder obersten Pouch-Zelle 1 an. Am in Stapelrichtung gegenüberliegenden Ende kann ebenfalls eine Andruckplatte 84 vorgesehen sein, die identisch ausgestaltet ist. Für jeden Stapel 42, 44 kann eine eigene Andruckplatte 84 vorgesehen sein.

Die Andruckplatte 84 wird durch eine Spannvorrichtung 86 gegen die Beutelabschnitte 6 der Pouch-Zellen 1 gedrückt. Die Spannvorrichtung 86 kann beispielsweise wenigstens eine in das Gehäuse geschraubte Schraube 88 aufweisen, die gegen die Andruckplatte 84 gefahren werden kann, um gegen die Beutelabschnitte 6 zu drücken. Die Schraube 88 kann, wie gezeigt, als Gewindestift ausgeführt sein. Eine Spannvorrichtung 86 mit Andruckplatte 84 kann an beiden in Stapelrichtung 22 gelegenen Enden des Batteriepacks 40 vorhanden sein. Beide Spannvorrichtungen 86 können identisch ausgestaltet sein. Zudem kann für jeden Stapel 42, 44 eine eigene Spannvorrichtung 86 vorhanden sein.

Um beim Betätigen der Spannvorrichtung 86 ein zu starkes Verkippen der Andruckplatte 84 zu vermeiden und gleichzeitig eine Führung beim Einschieben des Batteriepacks 40 in das Gehäuse 82 bereitzustellen, kann an wenigstens einem in Stapelrichtung 22 gelegenen Ende eine Längsführung 90 vorgesehen sein. Die Längsführung 90 blockiert eine Relativbewegung der Andruckplatte 84 in nur einer Raumrichtung, beispielsweise der Breitenrichtung 26. In der in Fig. 8 dargestellten einfachen Ausgestaltung besteht die Längsführung 90 aus einer Nut-Feder-Anordnung, die sich quer zur Breitenrichtung 26 und Stapelrichtung 22 erstreckt. Ein Teil der Nut-Feder-Anordnung - beispielsweise die Feder - befindet sich an der Andruckplatte 84, ein anderer Teil am Gehäuse 82.

Die Andruckplatte 84 kann aus einem Kunststoff, einem Verbundwerkstoff oder einem Metallwerkstoff, wie beispielsweise Aluminium, gefertigt sein. Fig. 8 zeigt, dass für jeden der beiden Stapel 42, 44 des Batteriepacks 40 eine separate Andruckplatte 84 oder ein separates Paar von Andruckplatten 84 vorhanden sein kann. Die Andruckplatten 84 überdecken in einer Ausgestaltung in Stapelrichtung 22 nicht die Elektroden 2, 4 bzw. die Leiterplatten 24.

In Fig. 9 ist schließlich gezeigt, dass eine Stromschiene 92 als Polanschluss verwendet werden kann.

Die Fig. 10 bis 16 zeigen eine erste Ausführungsform eines Batteriepacks 40 gemäß der Erfindung und werden im Folgenden gemeinsam beschrieben. Das erfindungsgemäße Batteriepack 40 weist ebenfalls zwei Stapel 42, 44 von ersten bzw. zweiten Pouch-Zellen 1a, 1b von Pouch-Zellen-Anordnungen 20 auf, welche denjenigen in den Fig. 1 bis 9 entsprechen und daher nicht noch einmal erläutert werden. In den Fig. 10 bis 16 werden wiederum für entsprechende Bauteile die gleichen Bezugszeichen wie in den Fig. 1 bis 9 verwendet, welche der Einfachheit halber teilweise auch weggelassen sind.

Im Gegensatz zu dem Batteriepack 40 aus dem Stand der Technik in den Fig. 8 und 9 ist bei dem erfindungsgemäßen Batteriepack 40 in den Fig. 10 bis 16 keine Spannvorrichtung vorgesehen, die sich von innen an einem Gehäuse abstützt. Stattdessen sind der erste Stapel 42 sowie der zweite Stapel 44 jeweils an zwei verschiedenen Stellen entlang ihrer Längsrichtung jeweils durch ein Kunststoffband 100 mehrfach umwickelt, und zwar im Ausführungsbeispiel mit etwa zweieinhalb Windungen, wie in Fig. 10 zu erkennen. Es können jedoch auch drei, vier, fünf oder noch mehr Windungen ausgeführt werden.

Das Kunststoffband 100 ist selbstklebend, wobei die Innenseite einer jeden Windung in üblicher Weise mit der Außenseite der vorhergehenden Windung verklebt wird.

Alternativ können auch aufeinander folgende Windungen des Kunststoffbandes 100 miteinander verschweißt werden.

Das Kunststoffband 100 steht dabei insbesondere an den in der Stapelrichtung 22 verlaufenden Abschnitten 102 unter Spannung, wodurch die Beutelabschnitte 6 der ersten Pouch-Zellen 1a im ersten Stapel 42 bzw. der zweiten Pouch-Zellen 1b im zweiten Stapel 44 jeweils zusammengepresst und damit komprimiert und unter eine Vorspannung gesetzt werden. Einer Aufblähung der Pouch-Zellen 1a, 1b während der Verwendung des Batteriepacks 40 wird so entgegengewirkt. Die Kompressionskraft beträgt im Ausführungsbeispiel für den ersten Stapel 42 und den zweiten Stapel 44 jeweils etwa 350 N.

Eine solche Vorspannung ist erforderlich, um die maximale Ausdehnung einer Pouch-Zelle 1a, 1b über deren Lebenszeit (beispielsweise über 2500 h oder 600 Entladezyklen) beispielsweise von ca. 0,6 mm (von 11,7 mm auf 12,3 mm) auf ca. 0,2 mm zu reduzieren.

Das Kunststoffband 100 hat im Ausführungsbeispiel eine Dicke von 0,08 mm, eine Breite von 3 cm und eine Reißkraft von 190 N/cm Breite. Das Kunststoffband 100 besteht vorzugsweise aus Polypropylen (PP) oder Polyethylen (PE) und kann Verstärkungsfasern aus Kohlenstoff oder Metall aufweisen.

Geht man im Ausführungsbeispiel bei jedem der insgesamt vier Kunststoffbänder 100 von zwei vollständigen Windungen aus, so können die insgesamt 16 unter Spannung stehenden Abschnitte 102 eine maximale Kompressionskraft von 16 x 190 N/cm x 3 cm = 9120 N aufnehmen, bevor das Kunststoffband 100 reißen würde.

Auf der Oberseite und der Unterseite des ersten Stapels 42 bzw. des zweiten Stapels 44 ist jeweils eine Andruckplatte 84 angeordnet, welche den Beutelabschnitt 6 der jeweils obersten bzw. untersten Pouch-Zelle 1a, 1b bedeckt. Die Andruckplatte 84 ist jeweils durch in der Stapelrichtung 22 angeordnete seitliche Stützflächen 104 zu einer im Querschnitt U-förmigen Schale erweitert, wobei die seitlichen Stützflächen 104 einen mechanischen Schutz für die längsseitigen Schmalseiten 12 der Pouch-Zellen 1a, 1b bieten. Wie in Fig. 10 zu erkennen, ist auf den beiden gegenüberliegenden längsseitigen Schmalseiten 12 jeweils zwischen den beiden seitlichen Stützflächen 104 in der Stapelrichtung 22 gesehen eine Lücke in Form eines durchgehenden offenen Streifens gelassen, um eine mit der Kompression des ersten Stapels 42 bzw. den zweiten Stapels 44 einhergehende Kollision der beiden jeweiligen seitlichen Stützflächen 104 zu vermeiden.

Die beiden jeweils starren, im Querschnitt U-förmigen Schalen bestehend jeweils aus einer Andruckplatte 84 und zwei seitlichen Stützflächen 104 bewirken, dass die Kunststoffbänder 100 den ersten Stapel 42 bzw. den zweiten Stapel 44 nur in der Stapelrichtung 22, jedoch nicht in der Breitenrichtung 26 komprimieren.

Die Kunststoffbänder 100 haben in der Längsrichtung gemessen jeweils nur eine geringe Breite, welche jeweils etwa 20 % der Ausdehnung des jeweiligen Stapels 42, 44 in der Längsrichtung beträgt. Hierdurch lassen sich die Kunststoffbänder 100 derart anordnen, dass in der Längsrichtung gesehen zwischen ihnen bzw. außerhalb von ihnen jeweils genügend Platz auf der Oberfläche des jeweiligen Stapels 42, 44 bzw. auf den Andruckplatten 84 und den seitlichen Stützflächen 104 frei bleibt.

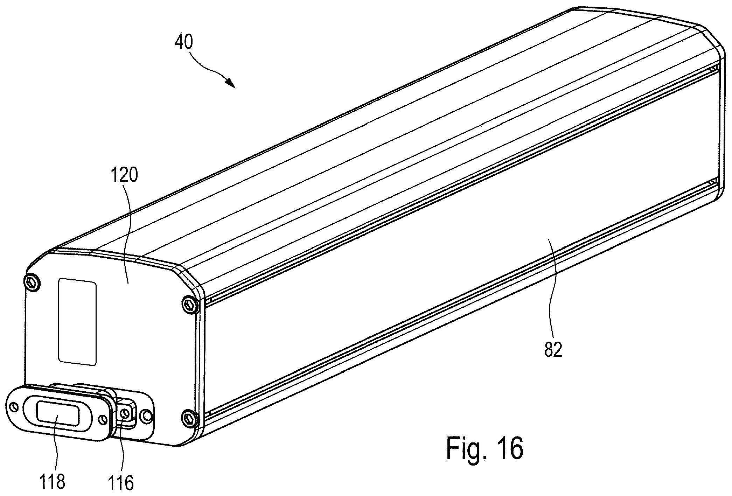

Auf diesem freien Platz sind zusätzliche, nach außen gerichtete Abstützvorrichtungen angeordnet, nämlich auf der oberen Andruckplatte 84 mehrere obere Stützarme 108 (in den Fig. 10 bis 15 zu sehen) sowie auf den mit der oberen Andruckplatte 84 verbundenen seitlichen Stützflächen 104 jeweils ein seitlicher Stützarm 106 (in Fig. 10 zu sehen). Die Stützarme 106, 108 dienen zur Abstützung des Batteriepacks 40 von innen gegen ein Gehäuse 82 (vgl. Fig. 10 und 16) und verhindern, dass das Batteriepack 40 innerhalb des Gehäuses 82 wackeln kann. Die untere Abstützplatte 84 ist dagegen mit einer Grundplatte 110 verbunden (vgl. Fig. 10), welche formschlüssig und weitgehend spielfrei in das Gehäuse 82 eingeschoben ist.

Die oberen Stützarme 108 sind vorzugsweise als federnde und damit elastische Zungen aus der oberen Andruckplatte 84 ausgeformt. Sie können jedoch auch als separate, elastische Bauteile gefertigt und mit der oberen Andruckplatte 84 verbunden sein. Die seitlichen Stützarme 106 sind dagegen als starre Fortsetzungen aus den seitlichen Stützflächen 104 ausgeformt oder als separate, starre Bauteile gefertigt und mit den seitlichen Stützflächen 104 verbunden. Somit können zumindest die elastischen oberen Stützarme 108 von außen über das Gehäuse 82 einwirkende Stöße abfedern, welche sonst über die obere Andruckplatte 84 direkt auf die Pouch-Zellen 1a, 1b wirken würden. Für die seitlichen Stützarme 106 ist dies nicht unbedingt erforderlich, da die mit ihnen verbundenen seitlichen Stützflächen 104 mechanisch nicht unmittelbar mit den Pouch-Zellen 1a, 1b verbunden sind.

Auf dem freien Platz in der Längsrichtung gesehen zwischen den Kunststoffbändern 100 bzw. außerhalb von diesen können weiterhin Befestigungsmöglichkeiten wie Verschraubungen mit dem Gehäuse 82 vorgesehen sein (nicht dargestellt).

Zwischen benachbarten Pouch-Zellen 1a, 1b im ersten Stapel 42 bzw. im zweiten Stapel 44 ist weiterhin jeweils ein elastisches Pads 112 eingelegt, um eine weiterhin auftretende Zunahme der Dicke der Pouch-Zellen 1a, 1b über deren Lebensdauer im Betrieb des Batteriepacks 40 aufnehmen zu können. Die elastischen Pads 112 werden dann in dem Maße komprimiert, in dem sich die Dicke der Pouch-Zellen 1a, 1b in dem jeweiligen Stapel 42, 44 verändert. Da sich somit jede Pouch-Zelle 1a, 1b weiterhin in geringem Maße in beide Richtungen ausdehnen kann, bleibt die Lage der gesamten Pouch-Zelle 1a, 1b relativ zu dem gesamten Stapel 42, 44 im Wesentlichen unverändert. Dies ist von hoher Bedeutung, da die ersten Elektroden 2a, 2b und die zweiten Elektroden 4a, 4b der Pouch-Zellen 1a, 1b in dem Klemmsystem 50 durch die beiden Haltebolzen 46a, 46b starr fixiert sind und an dieser Stelle kein Ausgleich der Lage der Pouch-Zellen 1a, 1b möglich wäre. Eine Verschiebung der Lage der Pouch-Zellen 1a, 1b in der Stapelrichtung 22 könnte somit zu einer Verformung der Elektroden 2a, 2b, 4a, 4b oder im schlimmsten Fall zu deren Beschädigung oder sogar zu deren Abreißen führen.

Umgekehrt können die elastischen Pads 112 durch ihre Verformung bei einer Dickenänderungen der Pouch-Zellen 1a, 1b Kräfte aufnehmen, die nicht noch zusätzlich von den Kunststoffbändern 100 aufgenommen werden müssen, sodass diese entlastet werden.

Die elastischen Pads 112 können auch verwendet werden, um fertigungsbedingte Toleranzen in der Dicke der Pouch-Zellen 1a, 1b von vornherein auszugleichen. So kann die Dicke der Pouch-Zellen 1a, 1b in unterschiedlichen Produktionslosen voneinander abweichen, was bereits vor der Montage des Batteriepacks 40 durch entsprechende Messungen festgestellt und durch eine entsprechende, komplementäre Verringerung bzw. Vergrößerung der Dicke der elastischen Pads 112 ausgeglichen werden kann.

Da derartige fertigungsbedingte Toleranzen in der Dicke der Pouch-Zellen 1a, 1b somit von vornherein feststehen, handelt es sich dabei um quasi-statische Abweichungen. Sie können daher auch durch nicht-elastische Ausgleichselemente wie dünne Metallplatten zwischen den Pouch-Zellen 1a, 1b anstelle der elastischen Pads 112 oder zusätzlich zu diesen ausgeglichen werden.

In Fig. 16 ist schließlich das Batteriepack 40 mit einem Gehäuse 82 dargestellt, welches durch einen stirnseitigen Deckel 120 verschlossen ist. In dem Deckel 120 ist ein Anschlussstecker 116 angeordnet, welcher bei Nichtgebrauch durch eine Abdeckkappe 118 abgedeckt ist.

Das Gehäuse 82 gemäß Fig. 16 unterscheidet sich von seiner äußeren Form her nicht von dem Gehäuse 82 der Gehäuseanordnung 80 gemäß Fig. 8. Es hat jedoch den Vorteil, dass das Batteriepack 40 aus dem Gehäuse 82 entnommen werden kann, ohne die Kompression der Pouch-Zellen 1a, 1b zu lösen, da bei dem erfindungsgemäßen Batteriepack 40 keine gegen das Gehäuse 82 abgestützte Spannvorrichtung 86 für die Pouch-Zellen 1a, 1b vorgesehen ist. Somit wird das Gehäuse 82 auch nicht mechanisch durch die Gegenkräfte der die Vorspannung des Batteriepacks 40 erzeugenden Kompressionskräfte belastet und ist daher praktisch kräftefrei. Da keine Spannvorrichtung 86 mit Schrauben 88 mehr vorgesehen ist, die grundsätzlich von jedem Benutzer des Batteriepacks 40 nach dessen Entnahme aus dem Fahrzeug bzw. dem Elektrogerät verstellt werden könnten, ist auch eine Fehlbedienung oder Manipulation der Einstellung der Vorspannung weitgehend ausgeschlossen. Da auch keine Schrauben 88 oder andere Einstellvorrichtungen durch das Gehäuse 82 mehr hindurchgeführt werden müssen, damit diese von außen zugänglich sind, ist das Gehäuse 82 auch leichter abdichtbar.

Weiterhin ergeben sich durch das erfindungsgemäße Batteriepack 40 Vorteile bei der Montage, da die Stapel 42, 44 der ersten und der zweiten Pouch-Zellen-Anordnungen 20a, 20b mit den Kunststoffbändern 100 und allen weiteren Komponenten außer dem Gehäuse 82 vollständig montiert und erst dann in das Gehäuse 82 eingeschoben und befestigt werden können.

Seitlich entlang der Längsrichtung des Batteriepacks 40 sind zwei Stromschienen 92 (sogenannte "Busbars") angeordnet, welche die Form von zwei flachen Metallstreifen haben. Die Stromschienen 92 sind an jeweils einem Ende mit einer derjenigen Elektroden 2a, 2b, 4a, 4b verbunden, welche einem jeweiligen Ende der Verschaltung der Pouch-Zellen 1a, 1b in einer Serien- oder Parallelschaltung oder einer Kombination hiervon entspricht. Auch die beiden Stromschienen 92 werden an den jeweiligen Elektroden 2a, 2b, 4a, 4b mithilfe des Klemmsystems 50 festgeklemmt.

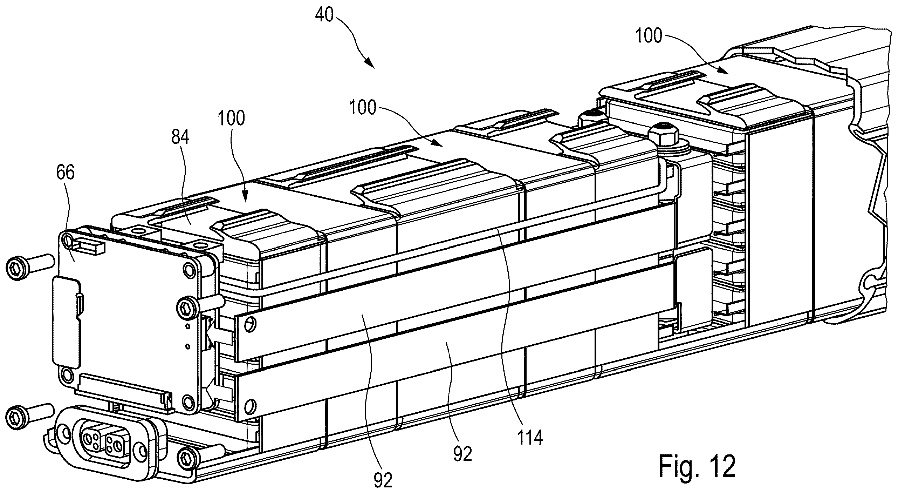

Das jeweils andere Ende der beiden Stromschienen 92 ist mit einem Batteriemanagement-System 66 verbunden, welches an einer Stirnseite des Batteriepacks 40 angeordnet ist (vgl. Fig. 12). Die beiden Stromschienen 92 übertragen den Ladestrom an die Pouch-Zellen 1a, 1b bzw. den von den Pouch-Zellen 1a, 1b abgegebenen Batteriestrom über das Batteriemanagement-System 66 an den Anschlussstecker 116.

In gleicher Weise ist auch eine Signalübertragungsleitung 114 angeordnet, welche nicht der Übertragung von elektrischer Leistung, sondern nur von elektrischen Signalen dient und daher mit kleinerem Querschnitt als die beiden Stromschienen 92 ausgeführt sein kann.

Sowohl die Stromschienen 92 als auch die Signalübertragungsleitung 114 sind außerhalb der Windungen der Kunststoffbänder 100 geführt und somit leicht montier- und austauschbar. Insbesondere werden sie auch nicht durch die von den Kunststoffbändern 100 erzeugten Kompressionskräfte belastet.

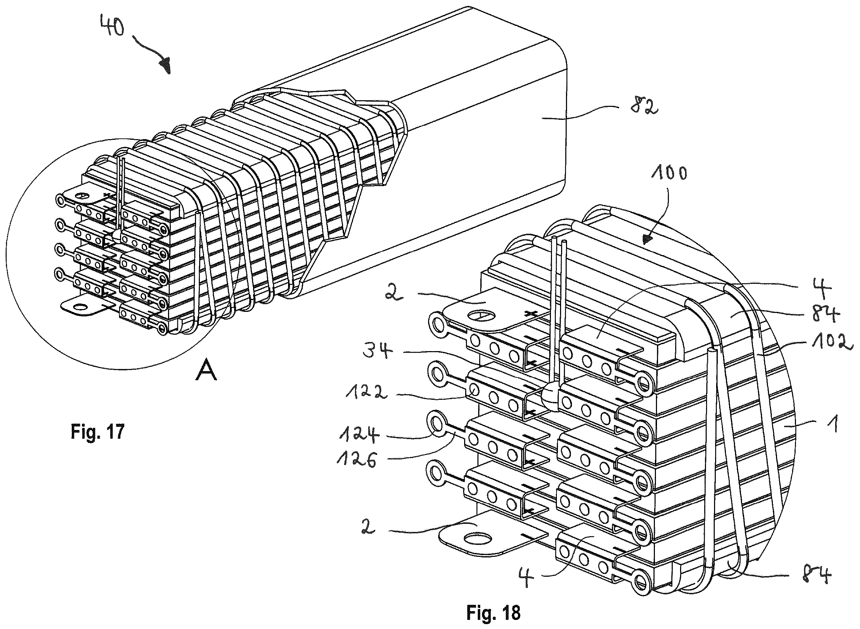

Die Fig. 17 und 18 zeigen eine zweite Ausführungsform eines Batteriepacks 40 gemäß der Erfindung. Hierbei zeigt Fig. 18 eine vergrößerte Darstellung des Details in dem mit "A" bezeichneten Kreis in Fig. 17.

Im Unterschied zur ersten Ausführungsform gemäß den Fig. 10 bis 16 weist das Batteriepack 40 gemäß der zweiten Ausführungsform nur einen einzigen Stapel von Pouch-Zellen 1 auf. Die Beutelabschnitte 6 aller ersten und zweiten Pouch-Zellen 1a, 1b der einzelnen Pouch-Zellen-Anordnungen 20 liegen somit in der Stapelrichtung 22 alle übereinander. Auch die ersten und zweiten Elektroden 2, 4 liegen alle auf derselben Seite der Pouch-Zellen 1 und damit in der Stapelrichtung 22 übereinander. Dabei ist die Polarität direkt benachbarter Pouch-Zellen 1 jeweils gegeneinander vertauscht, d. h die ersten Elektroden 2 bzw. die zweiten Elektroden 4 sind in der Stapelrichtung 22 gesehen jeweils abwechselnd Pluspole und Minuspole der Pouch-Zellen 1.

Die Pouch-Zellen 1 sind in diesem Fall alle in Reihe geschaltet. Im Gegensatz zur ersten Ausführungsform wird dies nicht durch ein separates Klemmsystem und eine separate Kontaktierungsanordnung erreicht, sondern durch eine unmittelbare und feste Verbindung der Elektroden 2, 4 benachbarter Pouch-Zellen 1 miteinander. Zu diesem Zweck sind alle Elektroden 2, 4, welche Pluspolen entsprechen, in der Stapelrichtung 22 an ihren Enden rechtwinklig nach oben und alle Elektroden 2, 4, welche Minuspolen entsprechen, in der Stapelrichtung 22 an ihren Enden rechtwinklig nach unten gebogen, und zwar jeweils so weit, dass sich die umgebogenen Abschnitte weitgehend überlappen.

Lediglich die erste Elektrode 2 der obersten Pouch-Zelle 1, welche einem Pluspol entspricht, sowie die erste Elektrode 2 der untersten Pouch-Zelle 1, welche einem Minuspol entspricht, sind nicht umgebogen und dienen als elektrische Anschlüsse für die gesamte Reihenschaltung der Pouch-Zellen 1. Diese ersten Elektroden 2 können beispielsweise wie in der ersten Ausführungsform mit Stromschienen 92 verbunden sein (hier nicht dargestellt).

Die sich überlappenden Abschnitte der Elektroden 2, 4 sind jeweils durch mehrere Schweißpunkte 122 zusammengeschweißt und damit dauerhaft elektrisch leitend verbunden. Statt durch eine Schweißverbindung können die Elektroden 2, 4 beispielsweise auch durch eine Crimpverbindung dauerhaft verbunden sein.

Die umgebogenen Elektroden 2, 4, welche Pluspolen entsprechen, weisen außerdem jeweils einen sich in der Breitenrichtung 26 nach außen erstreckenden Anschlussstreifen 126 auf, an dessen äußerem Ende eine Kontaktöse 124 angeformt ist. Die Kontaktösen 124 dienen zum Anschluss beispielsweise an ein Batterie-Managementsystem 66 (hier nicht dargestellt) zur Überwachung der elektrischen Parameter einer jeweiligen Pouch-Zelle 1, wie oben beschrieben. Die umgebogenen Abschnitte der Elektroden 2, 4 mit den Anschlussstreifen 126 und den Kontaktösen 124 entsprechen somit den Leiterplatten 24 mit den Leiterbahnen 64 in der ersten Ausführungsform, sind jedoch nicht als Platinen, sondern nur rudimentär als einfache leitende Bleche ausgeführt.

Im Unterschied zur ersten Ausführungsform sind hierbei jedoch keinerlei separaten Bauteile für Leiterplatten, für ein Klemmsystem bzw. für eine Kontaktierungsanordnung erforderlich, was die Herstellungskosten des Batteriepacks 40 gemäß der zweiten Ausführungsform erheblich verringert.

Zur Überwachung der Temperatur einzelner Elektroden 2, 4 und damit auch der Temperatur der zugehörigen Pouch-Zellen 1 ist in unmittelbarer Nähe der betreffenden Elektroden 2, 4 ein Temperatursensor 34 angeordnet. Bei dem Temperatursensor 34 handelt es sich in diesem Fall vorzugsweise um ein diskretes Bauteil, welches nur durch seine beiden Anschlussdrähte fixiert ist. In den Fig. 17 und 18 ist der Übersichtlichkeit halber nur ein Temperatursensor 34 dargestellt, welcher zwischen den beiden Elektroden 2, 4 derselben Pouch-Zelle 1 angeordnet ist und somit die Temperatur dieser Pouch-Zelle 1 überwacht. Vorzugsweise ist jedoch in der Nähe einer jeden Pouch-Zelle 1 ein eigener Temperatursensor 34 angeordnet.

Schließlich unterscheidet sich auch das Kunststoffband 100 in der zweiten Ausführungsform von dem in der ersten Ausführungsform verwendeten dadurch, dass es einen kreisrunden Querschnitt aufweist. Der Querschnitt des Kunststoffbandes 100 kann selbstverständlich auch jede andere Form annehmen. Alternativ kann anstelle eines Kunststoffbandes 100 auch ein metallischer Draht verwendet werden. Sowohl das Kunststoffband 100 als auch der metallische Draht hat jedoch vorzugsweise eine geringe Elastizität, damit eine hinreichend große Vorspannung der Pouch-Zellen 1 erreicht werden kann.

In der zweiten Ausführungsform ist das Kunststoffband 100 in einer durchgehenden Wicklung mit voneinander in der Längsrichtung beabstandeten Windungen um den Stapel der Pouch-Zellen 1 herumgewickelt und an seinen Enden jeweils an einem Abschnitt des Kunststoffbandes 100 an einer benachbarten Windung fixiert, beispielsweise verschweißt.

Wie in der ersten ist auch in der zweiten Ausführungsform oberhalb der obersten Pouch-Zelle 1 sowie unterhalb der untersten Pouch-Zelle 1 jeweils eine Andruckplatte 84 angeordnet. Um zu geringe Radien und damit verbunden ein Abknicken, Einkerben oder Beschädigen des Kunststoffbandes 100 an den Ecken des Stapels der Pouch-Zellen 1 zu vermeiden, sind beide Andruckplatten 84 an ihren äußeren Rändern in der Breitenrichtung 26 etwas heruntergezogen und mit abgerundeten äußeren Ecken versehen.

### Bezugszeichenliste

- 1: Pouch-Zelle
- 1a: erste Pouch-Zelle
- 1b: zweite Pouch-Zelle
- 2: erste Elektrode
- 2a: erste Elektrode der ersten Pouch-Zelle
- 2b: erste Elektrode der zweiten Pouch-Zelle
- 4: zweite Elektrode
- 4a: zweite Elektrode der ersten Pouch-Zelle
- 4b: zweite Elektrode der zweiten Pouch-Zelle
- 6: Beutelabschnitt
- 8: Folie
- 10: Flachseite des Beutelabschnitts
- 12: Schmalseite des Beutelabschnitts
- 14: Flachseite der Elektrode
- 16: Seitenwand des Beutelabschnitts
- 18: Aussparung
- 20: Pouch-Zellen-Anordnung
- 20a: erste Pouch-Zellen-Anordnung
- 20b: zweite Pouch-Zellen-Anordnung
- 22: Stapelrichtung
- 24: Leiterplatte
- 24a: erste Leiterplatte
- 24b: zweite Leiterplatte
- 26: Breitenrichtung
- 28: Stecker
- 30: Gegenstecker
- 32: elektronisches Bauelement
- 34: Temperatursensor
- 36: Wärmebrücke
- 38: Stromsensor
- 40: Batteriepack
- 42: erster Stapel
- 44: zweiter Stapel
- 46: Haltebolzen
- 46a: erster Haltebolzen
- 46b: zweiter Haltebolzen
- 48: Distanzstück
- 48a: erstes Distanzstück
- 48b: zweites Distanzstück
- 49: Kontaktierungsanordnung
- 50: Klemmsystem
- 52: Durchkontaktierung
- 54: durch Aussparung hindurchreichender Abschnitt eines Distanzstückes
- 56: Aufnahme eines Distanzstückes
- 58: Isolierhülse
- 60: Abschlussstecker
- 62: Anschluss an Batteriemanagement-System
- 64: Leiterbahn
- 64a: erste Leiterbahn
- 64b: zweite Leiterbahn
- 65: Kontaktbereich
- 66: Batteriemanagement-System
- 68: Abschlussplatte
- 70: Kopfabschnitt
- 72: Polanschluss
- 80: Gehäuseanordnung
- 82: Gehäuse
- 84: Andruckplatte
- 86: Spannvorrichtung
- 88: Schraube
- 90: Längsführung
- 92: Stromschiene
- 100: Kunststoffband
- 102: Abschnitt des Kunststoffbandes
- 104: Seitliche Stützfläche
- 106: Seitlicher Stützarm
- 108: Oberer Stützarm
- 110: Grundplatte
- 112: Elastisches Pad
- 114: Signalübertragungsleitung
- 116: Anschlussstecker
- 118: Abdeckkappe
- 120: Deckel
- 122: Schweißpunkt
- 124: Kontaktöse
- 126: Anschlussstreifen

## Patentansprüche

1. Batteriepack (40), insbesondere zum Antrieb eines elektrisch angetriebenen Leichtfahrzeugs oder eines Elektrogerätes,
wobei das Batteriepack (40) eine erste Pouch-Zellen-Anordnung (20, 20a) und eine zweite Pouch-Zellen-Anordnung (20, 20b) aufweist,
wobei die erste Pouch-Zellen-Anordnung (20, 20a) und die zweite Pouch-Zellen-Anordnung (20, 20b) jeweils eine erste Pouch-Zelle (1, 1a) und eine zweite Pouch-Zelle (1, 1b) aufweisen,
wobei die erste Pouch-Zelle (1, 1a) und die zweite Pouch-Zelle (1, 1b) jeweils eine als Flachkörper ausgestaltete erste Elektrode (2, 2a, 2b) und eine als Flachkörper ausgestaltete zweite Elektrode (4, 4a, 4b) aufweisen,
wobei die erste Elektrode (2a) der ersten Pouch-Zelle (1a) mit der ersten Elektrode (2b) der zweiten Pouch-Zelle (1b) elektrisch leitend verbunden ist und/oder die zweite Elektrode (4a) der ersten Pouch-Zelle (1a) mit der zweiten Elektrode (4b) der zweiten Pouch-Zelle (1b) elektrisch leitend verbunden ist und
wobei die erste Pouch-Zellen-Anordnung (20, 20a) in der Stapelrichtung (22) unmittelbar benachbart zu, insbesondere über, der zweiten Pouch-Zellen-Anordnung (20, 20b) angeordnet ist,
**dadurch gekennzeichnet, dass**
das Batteriepack (40) weiterhin wenigstens ein Kompressionsband (100) aufweist, welches wenigstens teilweise um die erste Pouch-Zellen-Anordnung (20a) und die zweite Pouch-Zellen-Anordnung (20b) herumgeführt ist, wobei wenigstens zwei auf einander gegenüberliegenden Seiten des Batteriepacks (40) angeordnete Kompressionsabschnitte (102) des Kompressionsbandes (100) in eine jeweilige Richtung verlaufen, welche wenigstens eine zu der Stapelrichtung (22) parallele Komponente aufweist, und das wenigstens eine Kompressionsband (100) die ersten Pouch-Zellen (1a) und/oder die zweiten Pouch-Zellen (1b) der ersten Pouch-Zellen-Anordnung (20a) und der zweiten Pouch-Zellen-Anordnung (20b) in der Stapelrichtung (22) komprimiert und dadurch unter eine in der Stapelrichtung (22) wirkende Vorspannung setzt.

2. Batteriepack (40), gemäß Anspruch 1, **dadurch gekennzeichnet, dass** das wenigstens eine Kompressionsband (100) in wenigstens einer, vorzugsweise in wenigstens zwei und weiter vorzugsweise in wenigstens drei vollständigen Umdrehungen um die erste Pouch-Zellen-Anordnung (20, 20a) und die zweite Pouch-Zellen-Anordnung (20, 20b) herumgeführt ist.

3. Batteriepack (40) gemäß einem der vorhergehenden Ansprüche, **dadurch gekennzeichnet, dass** eine in einer senkrecht zu der Stapelrichtung (22) verlaufenden Querrichtung gemessene Breite wenigstens eines der wenigstens zwei Kompressionsabschnitte (102) kleiner ist als die Gesamtausdehnung des Batteriepacks (40) in der Querrichtung, vorzugsweise kleiner als 30 %, weiter vorzugsweise kleiner als 20 % und noch weiter vorzugsweise kleiner als 10 % der Gesamtausdehnung des Batteriepacks (40) in der Querrichtung.

4. Batteriepack (40) gemäß Anspruch 1 oder 2, **dadurch gekennzeichnet, dass** eine in einer senkrecht zu der Stapelrichtung (22) verlaufenden Querrichtung gemessene Breite wenigstens eines der wenigstens zwei Kompressionsabschnitte (102) größer ist als 5 %, vorzugsweise größer als 10 %, weiter vorzugsweise größer als 20 % und noch weiter vorzugsweise größer als 25 % der Gesamtausdehnung des Batteriepacks (40) in der Querrichtung.

5. Batteriepack (40) gemäß einem der vorhergehenden Ansprüche, **dadurch gekennzeichnet, dass** wenigstens zwischen zwei in der Stapelrichtung (22) gesehen unmittelbar benachbart angeordneten Pouch-Zellen (1a, 1b) wenigstens ein Kompressionselement (112) aus einem elastischen Material angeordnet ist, welches dazu eingerichtet ist, bei einer Ausdehnung wenigstens einer der beiden Pouch-Zellen (1a, 1b) komprimiert zu werden.

6. Batteriepack (40) gemäß Anspruch 5, **dadurch gekennzeichnet, dass** das wenigstens eine Kompressionsband (100) auch das wenigstens eine Kompressionselement (112) in der Stapelrichtung (22) komprimiert und dass eine in der Stapelrichtung (22) gemessene Dicke an einer Stelle des wenigstens einen Kompressionselementes (112) im komprimierten Zustand zwischen 65 % und 95 %, vorzugsweise zwischen 70 % und 90 %, weiter vorzugsweise zwischen 75 % und 85 % der Dicke des wenigstens einen Kompressionselementes (112) an dieser Stelle im nicht komprimierten Zustand beträgt.

7. Batteriepack (40) gemäß Anspruch 5 oder 6, **dadurch gekennzeichnet, dass** eine in der Stapelrichtung (22) gemessene Dicke an einer Stelle des wenigstens einen Kompressionselementes (112) im nicht komprimierten Zustand zwischen 5 % und 25 %, vorzugsweise zwischen 8 % und 16 %, weiter vorzugsweise zwischen 10 % und 14 % der Dicke einer in der Stapelrichtung (22) gesehen unmittelbar benachbart angeordneten Pouch-Zelle (1a, 1b) an dieser Stelle im unkomprimierten Neuzustand beträgt.

8. Batteriepack (40) gemäß einem der vorhergehenden Ansprüche, **dadurch gekennzeichnet, dass** das Batteriepack (40) wenigstens eine erste Andruckplatte (84) aufweist, die dazu eingerichtet ist, gegen einen Beutelabschnitt (6) wenigstens einer in der Stapelrichtung (22) gesehen äußersten Pouch-Zelle (1a, 1b) des Batteriepacks (40) zu drücken, wobei das wenigstens eine Kompressionsband (100) wenigstens teilweise auch um die wenigstens eine erste Andruckplatte (84) herumgeführt ist.

9. Batteriepack (40) gemäß Anspruch 8, **dadurch gekennzeichnet, dass** das Batteriepack (40) weiterhin wenigstens eine zweite Andruckplatte (84) aufweist, die dazu eingerichtet ist, gegen einen Beutelabschnitt (6) einer von der ersten Andruckplatte (84) aus in der Stapelrichtung (22) gesehen gegenüberliegenden äußersten Pouch-Zelle (1a, 1b) des Batteriepacks (40) zu drücken, wobei das wenigstens eine Kompressionsband (100) wenigstens teilweise auch um die wenigstens eine zweite Andruckplatte (84) herumgeführt ist.

10. Batteriepack (40) gemäß Anspruch 8 oder 9, **dadurch gekennzeichnet, dass** das Batteriepack (40) weiterhin ein Gehäuse (82) aufweist, in welchem alle anderen Komponenten des Batteriepacks (40) aufgenommen sind, wobei das Gehäuse (82) insbesondere in mittelbar oder unmittelbar berührender Verbindung mit der ersten Andruckplatte (84) bzw. mit der zweiten Andruckplatte (84) und/oder mit wenigstens einem der wenigstens zwei Kompressionsabschnitte (102) des wenigstens einen Kompressionsbandes (100) steht und zur Montage und/oder Demontage des Batteriepacks (40) insbesondere relativ zu der ersten Andruckplatte (84) bzw. zu der zweiten Andruckplatte (84) und/oder zu wenigstens einem der wenigstens zwei Kompressionsabschnitte (102) des wenigstens einen Kompressionsbandes (100) insbesondere in einer senkrecht zu der Stapelrichtung (22) verlaufenden Querrichtung verschiebbar ist.

11. Batteriepack (40) gemäß einem der Ansprüche 8 und 9 und gemäß Anspruch 10, **dadurch gekennzeichnet, dass** die erste Andruckplatte (84) und/oder die zweite Andruckplatte (84) wenigstens eine, insbesondere elastische, erste Abstützvorrichtung (108) zur Abstützung der ersten Andruckplatte (84) bzw. der zweiten Andruckplatte (84) von innen gegen das Gehäuse (82) aufweist.

12. Batteriepack (40) gemäß den Ansprüchen 3 und 11, **dadurch gekennzeichnet, dass** die wenigstens eine erste Abstützvorrichtung (108) in wenigstens einem Abschnitt des Batteriepacks (40) entlang der Querrichtung angeordnet ist, in dem nicht das wenigstens eine Kompressionsband (100) angeordnet ist.

13. Batteriepack (40) gemäß einem der vorhergehenden Ansprüche, **dadurch gekennzeichnet, dass** an wenigstens einer Seite des Batteriepacks (40), an der ein Kompressionsabschnitt (102) des wenigstens einen Kompressionsbandes (100) angeordnet ist, eine, insbesondere starre, Stützfläche (104) zur seitlichen Stützung der ersten Pouch-Zellen (1a) und/oder der zweiten Pouch-Zellen (1b) der ersten Pouch-Zellen-Anordnung (20a) und der zweiten Pouch-Zellen-Anordnung (20b) angeordnet ist.

14. Batteriepack (40) gemäß einem der Ansprüche 10 bis 12und gemäß Anspruch 13, **dadurch gekennzeichnet, dass** die Stützfläche (104) wenigstens eine, insbesondere starre, zweite Abstützvorrichtung (106) zur Abstützung der Stützfläche (84) von innen gegen das Gehäuse (82) aufweist.

15. Batteriepack (40) gemäß einem der vorhergehenden Ansprüche, **dadurch gekennzeichnet, dass** das Batteriepack (40) wenigstens eine Stromschiene (92) aufweist, welche mit einer ersten Elektrode (2a, 2b) oder einer zweiten Elektrode (4a, 4b) elektrisch leitend verbunden ist und in einer Richtung, welche senkrecht zu der Stapelrichtung (22) verläuft, zwischen der ersten Elektrode (2a, 2b) bzw. der zweiten Elektrode (4a, 4b) und einer Stirnseite des Batteriepacks (40) verläuft.

16. Batteriepack (40) gemäß einem der vorhergehenden Ansprüche, **dadurch gekennzeichnet, dass** die erste Pouch-Zellen-Anordnung (20, 20a) und die zweite Pouch-Zellen-Anordnung (20, 20b) weiterhin jeweils eine in der Stapelrichtung (22) zwischen der ersten Elektrode (2a) der ersten Pouch-Zelle (1a) und der ersten Elektrode (2b) der zweiten Pouch-Zelle (1b) angeordnete Leiterplatte (24, 24a) und/oder eine in der Stapelrichtung (22) zwischen der zweiten Elektrode (4a) der ersten Pouch-Zelle (1a) und der zweiten Elektrode (4b) der zweiten Pouch-Zelle (1b) angeordnete Leiterplatte (24, 24b) aufweisen.

17. Batteriepack (40) gemäß einem der vorhergehenden Ansprüche, **dadurch gekennzeichnet, dass** das Batteriepack (40) weiterhin ein Klemmsystem (50) aufweist, durch das jeweils mindestens
- die ersten Elektroden (2a, 2b) der beiden Pouch-Zellen (1a, 1b) der ersten Pouch-Zellen-Anordnung (20a), und/oder
- die ersten Elektroden (2a, 2b) der beiden Pouch-Zellen (1a, 1b) der zweiten Pouch-Zellen-Anordnung (20b), und/oder
- die zweiten Elektroden (4a, 4b) der beiden Pouch-Zellen (1a, 1b) der ersten Pouch-Zellen-Anordnung (20a) und/oder
- die zweiten Elektroden (4a, 4b) der beiden Pouch-Zellen (1a, 1b) der zweiten Pouch-Zellen-Anordnung (20b)
in der Stapelrichtung (22) gegeneinander gedrückt sind.

18. Batteriepack (40) gemäß einem der vorhergehenden Ansprüche, **dadurch gekennzeichnet, dass** das Batteriepack (40) weiterhin eine Kontaktierungsanordnung (49) aufweist, welche
- die erste Elektrode (2a) oder die zweite Elektrode (4a) der ersten Pouch-Zelle (1a) der ersten Pouch-Zellen-Anordnung (20a) mit der ersten Elektrode (2b) bzw. mit der zweiten Elektrode (4b) der zweiten Pouch-Zelle (1b) der ersten Pouch-Zellen-Anordnung (20a) verbindet,
- die erste Elektrode (2a) oder die zweite Elektrode (4a) der ersten Pouch-Zelle (1a) der zweiten Pouch-Zellen-Anordnung (20b) mit der ersten Elektrode (2b) bzw. mit der zweiten Elektrode (4b) der zweiten Pouch-Zelle (1b) der zweiten Pouch-Zellen-Anordnung (20b) verbindet und
- eine Elektrode (2a, 2b, 4a, 4b) der ersten Pouch-Zellen-Anordnung (20a) mit einer Elektrode (2a, 2b, 4a, 4b) der zweiten Pouch-Zellen-Anordnung (20b) verbindet
und eine Elektrode (2a,2b,4a,4b) der ersten Pouch-Zellen-Anordnung (20a) oder eine Elektrode (2a,2b,4a,4b) der zweiten Pouch-Zellen-Anordnung (20b) in der Nähe eines Temperatursensors (34), insbesondere in einer maximalen Entfernung von 30 mm, angeordnet ist.
